(19) Europäisches Patentamt / European Patent Office / Office européen des brevets

(11) **EP 4 249 680 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **23161343.1**

(22) Anmeldetag: **10.03.2023**

(51) Internationale Patentklassifikation (IPC):
***E01C 23/088*** (2006.01)

(52) Gemeinsame Patentklassifikation (CPC):
**G05D 1/0891; E01C 23/088; G01C 9/00**

(54) **SELBSTFAHRENDE BODENFRÄSMASCHINE UND VERFAHREN ZUM STEUERN EINER SELBSTFAHRENDEN BODENFRÄSMASCHINE**

SELF-PROPELLED GROUND MILLING MACHINE AND METHOD FOR CONTROLLING A SELF-PROPELLED GROUND MILLING MACHINE

FRAISEUSE ROUTIÈRE AUTOMOTRICE ET PROCÉDÉ DE COMMANDE D'UNE FRAISEUSE ROUTIÈRE AUTOMOTRICE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **23.03.2022   DE 102022106808**

(43) Veröffentlichungstag der Anmeldung:
**27.09.2023   Patentblatt 2023/39**

(73) Patentinhaber: **Wirtgen GmbH
53578 Windhagen (DE)**

(72) Erfinder:
• **Berning, Christian
  53909 Zülpich (DE)**
• **Gasiorek, Mariusz
  57610 Altenkirchen (DE)**
• **Held, Hanjo
  53578 Windhagen (DE)**
• **Müller, René
  53560 Vettelschoß (DE)**

(74) Vertreter: **Oppermann, Frank
  OANDO Oppermann & Oppermann
  Thurn-und-Taxis-Platz 6
  60313 Frankfurt am Main (DE)**

(56) Entgegenhaltungen:
EP-A1- 3 067 468          EP-B1- 0 836 659
EP-B1- 1 855 899          DE-A1- 102006 020 293
DE-B4- 102018 127 222     US-A1- 2022 064 879

**Beschreibung**

Die Erfindung betrifft eine selbstfahrende Bodenfräsmaschine, welche einen Maschinenrahmen umfasst, der von einem Fahrwerk getragen wird, welches ein vorderes linkes Laufwerk und ein vorderes rechtes Laufwerk und ein hinteres linkes und ein hinteres rechtes Laufwerk aufweist, wobei an dem Maschinenrahmen eine Fräswalze angeordnet ist. Darüber hinaus betrifft die Erfindung ein Verfahren zum Steuern einer derartigen Bodenfräsmaschine.

Nachfolgend wird unter einer Bodenfräsmaschine eine Fräsmaschine verstanden, die dazu geeignet ist, von einem Boden Material abzufräsen. Der zu bearbeitende Boden kann beispielsweise eine bestehende Verkehrsfläche (Straße) sein, von dem Material abgefräst werden soll.

Im Straßenbau werden selbstfahrende Straßenfräsmaschinen unterschiedlicher Bauart eingesetzt. Zu diesen Baumaschinen zählen die bekannten Straßenfräsmaschinen, mit denen bestehende Straßenschichten des Straßenoberbaus abgetragen werden können. Die bekannten Straßenfräsmaschinen verfügen über eine rotierende Fräswalze, die mit Fräswerkzeugen zur Bearbeitung der Fahrbahn bestückt ist. Die Fräswalze ist an dem Maschinenrahmen angeordnet, der in der Höhe gegenüber der zu bearbeitenden Straße verstellbar ist. Die Höhenverstellung des Maschinenrahmens erfolgt mittels Hubeinrichtungen, die den einzelnen Kettenlaufwerken oder Rädern (Laufwerken) zugeordnet sind. Zum Abfräsen eines schadhaften Straßenbelages wird der Maschinenrahmen abgesenkt, so dass die Fräswalze in den Straßenbelag eindringt. Die Hubeinrichtungen erlauben sowohl die Höhenverstellung des Maschinenrahmens bzw. der Fräswalze als auch die Einstellung einer vorgegebenen Neigung des Maschinenrahmens bzw. der Fräswalze quer zur Vorschubrichtung der Straßenfräsmaschine.

Die EP 0 836 659 B1 beschreibt eine Straßenfräsmaschine, die einen von zwei vorderen und hinteren Laufwerken getragenen Maschinenrahmen aufweist. Die vorderen Laufwerke sind derart am Maschinenrahmen befestigt, dass sie Änderungen in der Querneigung des Straßenbelages gegensinnig und in gleichem Maße folgen können. Diese Anordnung wird auch als Pendelachse bezeichnet. Eine Straßenfräsmaschine mit einer Pendelachse ist auch aus der DE 102 10 763 A1 bekannt.

Die EP 1 855 899 B1 beschreibt eine Straßenfräsmaschine, deren vordere und hintere Laufwerke derart miteinander zwangsgekoppelt sind, dass das linke vordere Laufwerk und das rechte hintere Laufwerk in dieselbe Richtung und zu dem rechten vorderen Laufwerk und dem linken hinteren Laufwerk in entgegengesetzter Richtung höhenverstellbar sind. Die Zwangskopplung der Laufwerke kann mechanisch oder hydraulisch erfolgen.

Die zu bearbeitenden Verkehrsflächen können unterschiedliche Profile haben, wobei sich die Querneigung verändern kann. In einer Rechtskurve ist die Straßenoberfläche gegenüber der Horizontalen in Fahrtrichtung nach rechts und in einer Linkskurve nach links geneigt. Auf einem geraden Streckenabschnitt kann eine Straße zu der einen oder anderen Seite geneigt sein. Folglich kann sich die Querneigung einer Straße über den Streckenverlauf verändern.

Die pendelnde Lagerung zumindest der vorderen, linken und rechten Laufwerke einer Bodenfräsmaschine hat den Vorteil, dass die Bodenfräsmaschine eine verbesserte Standsicherheit hat. Die pendelnd gelagerten vorderen Laufwerke, die auf dem unbearbeiteten Boden aufstehen, können Querneigungen des zu bearbeitenden Streckenabschnitts der Verkehrsfläche folgen.

Aus der DE 10 2006 020 293 A1 ist eine Nivelliereinrichtung für eine Straßenfräsmaschine bekannt, die auf der linken und rechten Seite der Straßenfräsmaschine jeweils einen Sensor zum Erfassen des Ist-Wertes der Frästiefe vorsieht. In Abhängigkeit von der Abweichung der gemessenen Ist-Werte von den Soll-Werten kann die Frästiefe auf der linken und rechten Seite der Maschine geregelt werden.

Die Erfindung betrifft insbesondere einen auch als Kopierfräsen bezeichneten Fräsvorgang, bei dem an jeder Stelle des zu bearbeitenden Bodens ein Belag mit derselben Dicke (Frästiefe) abgefräst werden soll, wobei die Querneigung der Oberfläche des Bodens gegenüber der Horizontalen beim Abfräsen nicht verändert, d. h. kopiert werden soll. Wenn beispielsweise bei einer Straße mit einer Querneigung nach rechts die Fahrbahndecke abgefräst werden soll, wobei die Straßenfräsmaschine rechts fahren soll (Rechtsverkehr), muss die Fräswalze in die Fahrbahndecke mit einer vorgegebenen Frästiefe eindringen, wobei die Fräswalze bzw. der Maschinenrahmen, an dem die Fräswalze angebracht ist, gegenüber der Horizontalen um einen vorgegebenen Winkel nach rechts geneigt sein muss.

Zu Beginn der Fräsarbeiten wird die Bodenfräsmaschine auf der Fahrbahn positioniert. Daraufhin werden die den Laufwerken zugeordneten Hubeinrichtungen eingefahren, so dass sich der Maschinenrahmen mit der Fräswalze absenkt. Der Maschinenrahmen wird so lange abgesenkt, bis die Fräswerkzeuge der rotierenden Fräswalze die Straßenoberfläche gerade berühren. Dieser Vorgang wird als "Ankratzen" bezeichnet. Dabei sollte die Fräswalze parallel zu der Straßenoberfläche ausgerichtet sein, wodurch die Ausrichtung des Maschinenrahmens bestimmt wird.

Wenn beispielsweise ein in Fahrtrichtung rechter, fahrbahnaußenseitiger Streckenabschnitt gefräst werden soll, kann die Frästiefe auf der in Arbeitsrichtung linken Seite der Fräswalze noch gemessen werden. Hierzu wird der Abstand eines auf den Maschinenrahmen der Straßenfräsmaschine bezogenen Referenzpunktes, der auf der linken Seite der Fräswalze liegt, zu dem unbearbeiteten Boden gemessen. Eine geeignete Referenzfläche ist aber auf der in Arbeitsrichtung rechten Seite der Baumaschine nicht vorhanden, wenn auf der rechten Seite ein Straßengraben oder eine Böschung ist. Daher kann eine Abstandsmessung am rechten Fahrbahnaußenrand nicht ohne weiteres vorgenommen werden. Für eine Abstandsmessung auf der rechten Seite könnte zwar ein Leitdraht verlegt werden, dies erweist sich aber in der Praxis als relativ aufwendig.

Im vorliegenden Fall könnte die Frästiefe auf der rechten Seite der Bodenfräsmaschine auch über die mittels eines Neigungssensors erfassbare Querneigung des Maschinenrahmens bzw. der Fräswalze gegenüber der Horizontalen geregelt werden. Eine Neigung der Bodenfräsmaschine nach rechts führt auf der rechten Seite der Bodenfräsmaschine zu einer Vergrößerung der Frästiefe und eine Neigung der Fräsmaschine nach links zu einer Verringerung der Frästiefe auf der rechten Seite der Bodenfräsmaschine. Um die Frästiefe auf der rechten Seite durch eine Veränderung der Querneigung des Maschinenrahmens einstellen zu können, müsste die einzustellende Neigung (Soll-Wert) aber über den gesamten Streckenverlauf bekannt sein. Daher müssten zusätzliche Informationen (Daten) über den Verlauf der zu bearbeitenden Wegstrecke vor Beginn der Fräsarbeiten bereitgestellt werden. In der Praxis ist hierzu das Abschreiten des zu bearbeitenden Streckenabschnitts, Messen der Querneigung und Anbringen von entsprechenden Markierungen auf der Fahrbahn erforderlich.

Für den oben beschriebenen Fall sieht die DE 10 2018 127 222 B4 eine Steuereinrichtung vor, welche die den Laufwerken zugeordneten Hubeinrichtungen in Abhängigkeit von mit einem ersten Abstandssensor und einem zweiten Abstandssensor erfassten Abstandswerten ansteuert, welche jeweils den Abstand eines Referenzpunktes zu der unbearbeiteten Bodenoberfläche messen. Die Referenzpunkte des ersten und zweiten Abstandssensors liegen in einer Vertikalebene, die von der Längsachse des Maschinenrahmens orthogonal geschnitten wird, und in der vorzugsweise auch die Achse der Fräswalze liegt.

Der Erfindung liegt die Aufgabe zugrunde, eine Bodenfräsmaschine zu schaffen, die eine exakte Bearbeitung des Bodens ermöglicht, insbesondere eine exakte Bearbeitung des Bodens ohne die Bereitstellung von zusätzlichen Informationen über die Querneigung der Bodenoberfläche vor den Fräsarbeiten auch dann erlaubt, wenn auf einer Seite der zu bearbeitenden Wegstrecke eine geeignete Referenzfläche für die Ermittlung von Abstandswerten nicht vorhanden ist. Darüber hinaus ist eine Aufgabe der Erfindung, ein entsprechendes Verfahren zum Steuern einer Bodenfräsmaschine anzugeben, welches auch beim Fehlen einer geeigneten Referenzfläche auf einer Seite der Bodenfräsmaschine eine exakte Bearbeitung des Bodens insbesondere ohne die Bereitstellung von zusätzlichen Informationen über die Querneigung der Bodenoberfläche vor den Fräsarbeiten erlaubt. Dabei sollte eine exakte Bearbeitung des Bodens auch dann möglich sein, wenn sich die Querneigung der zu bearbeitenden Wegstrecke im Verlauf der Wegstrecke verändert, beispielsweise in einer Kurve oder beim Übergang einer geraden Wegstrecke in eine Kurve oder umgekehrt.

Die Lösung dieser Aufgaben erfolgt erfindungsgemäß mit den Merkmalen der unabhängigen Ansprüche. Die Gegenstände der abhängigen Ansprüche betreffen vorteilhafte Ausführungsformen der Erfindung.

Die erfindungsgemäße Bodenfräsmaschine verfügt über einen Maschinenrahmen, der von einem Fahrwerk getragen wird, welches ein vorderes linkes Laufwerk und ein vorderes rechtes Laufwerk und ein hinteres linkes Laufwerk und ein hinteres rechtes Laufwerk aufweist, und eine am Maschinenrahmen angeordnete Fräswalze aufweist. Die erfindungsgemäße Bodenfräsmaschine sieht zwei unterschiedliche Ausführungsformen vor.

Bei der einen Ausführungsform sind sowohl den vorderen als auch den hinteren Laufwerken zugeordnete Hubeinrichtungen vorgesehen, die zum Anheben oder Absenken der vorderen und hinteren Laufwerke gegenüber dem Maschinenrahmen jeweils einfahrbar oder ausfahrbar sind. Die Hubeinrichtungen der vorderen Laufwerke sind derart miteinander zwangsgekoppelt, dass ein Anheben des linken vorderen Laufwerks ein Absenken des rechten vorderen Laufwerks und ein Absenken des linken vorderen Laufwerks ein Anheben des rechten vorderen Laufwerks bewirkt, wobei das Anheben und das Absenken um die gleichen Beträge erfolgt.

Bei der anderen Ausführungsform sind nur den hinteren Laufwerken Hubeinrichtungen zugeordnet, welche zum Anheben bzw. Absenken der hinteren Laufwerke gegenüber dem Maschinenrahmen jeweils ein- bzw. ausgefahren werden können. Die vorderen Laufwerke sind in der Art einer pendelnden Lagerung mit dem Maschinenrahmen derart verbunden, dass ein Anheben des linken vorderen Laufwerks ein Absenken des rechten vorderen Laufwerks um den gleichen Betrag und ein Absenken des linken vorderen Laufwerks ein Anheben des rechten vorderen Laufwerks um den gleichen Betrag bewirkt. Diese pendelnde Lagerung kann beispielsweise mit einem Pendelachsen-System erfolgen, an welcher die vorderen Laufwerke befestigt sind.

Wenn nachfolgend von "einer" Messeinrichtung die Rede ist, bedeutet dies nicht, dass nicht noch weitere Messeinrichtungen vorhanden sein können. Wenn nachfolgend von einer Steuerung in Abhängigkeit von "einem" Signal die Rede ist, schließt dies nicht aus, dass die Steuerung nicht noch in Abhängigkeit von weiteren Signalen erfolgen kann.

Des Weiteren ist eine Abstands-Messeinrichtung vorgesehen, welche derart ausgebildet ist, dass der Abstand zwischen einem auf den Maschinenrahmen bezogenen Referenzpunkt und der Bodenoberfläche gemessen wird, wobei von der Abstands-Messeinrichtung Abstandswerte ermittelt werden. Unter Abstandswerten werden in diesem Zusammenhang sämtliche mit dem Abstand korrelierende Größen verstanden. Diese Abstandswerte können als analoge Signale oder Datensätze übertragen bzw. verarbeitet werden.

Darüber hinaus verfügt die erfindungsgemäße Bodenfräsmaschine über eine Steuereinrichtung, die derart konfiguriert ist, dass Steuersignale (Daten oder Datensätze) für die Hubeinrichtungen der Laufwerke erzeugt werden, wobei die Hubeinrichtungen der Laufwerke derart ausgebildet sind, dass die Laufwerke in Abhängigkeit von den Steuersignalen eingefahren oder ausgefahren werden, um beispielsweise die Frästiefe oder die Querneigung einstellen zu können.

Die erfindungsgemäße Bodenfräsmaschine zeichnet sich durch eine Querneigungs-Erfassungseinrichtung aus, welche derart ausgebildet ist, dass die Stellung des vorderen linken Laufwerks und/oder des vorderen rechten Laufwerks, welche auf dem unbearbeiteten Boden aufstehen, in Bezug auf den Maschinenrahmen erfasst wird und aus der Stellung des vorderen linken Laufwerks und/oder des vorderen rechten Laufwerks die Querneigung der Bodenoberfläche quer zur Arbeitsrichtung der Bodenfräsmaschine in Bezug auf den Maschinenrahmen beschreibende Querneigungswerte ermittelt werden. Im Gegensatz zu einem konventionellen Querneigungssensor, der die Neigung des Maschinenrahmens bzw. der Fräswalze gegenüber der Horizontalen misst, erlaubt die erfindungsgemäße Querneigungs-Erfassungseinrichtung die Erfassung der sich im Streckenverlauf möglichweise verändernden Querneigung des unbearbeiteten Bodens, auf dem die vorderen Laufwerke aufstehen. Die Querneigungs-Erfassungseinrichtung fungiert daher als Querneigungs-Sensorsystem zur Erfassung der Querneigung des Streckenverlaufs. Unter Querneigungswerten werden in diesem Zusammenhang sämtliche mit der Querneigung korrelierende Größen verstanden. Diese Querneigungswerte können als analoge Signale oder Daten bzw. Datensätze übertragen bzw. verarbeitet werden. Zur Ermittlung der Querneigung kann die Hubstellung der dem vorderen linken Laufwerk zugeordneten Hubeinrichtung und/oder die Hubstellung der dem vorderen rechten Laufwerk zugeordneten Hubeinrichtung erfasst werden. Aufgrund der Zwangskopplung der Hubeinrichtungen kann es ausreichend sein, nur die Hubstellung einer der beiden Hubeinrichtungen zu erfassen, da von der Hubstellung der einen Hubeinrichtung auf die Hubstellung der anderen Hubeinrichtung geschlossen werden kann. Bei einem Pendelachsen-System beispielsweise kann die Winkelstellung einer pendelnden Achse erfasst werden, um die Stellung eines Laufwerkes zu erfassen.

Die Steuereinrichtung wirkt mit der Abstands-Messeinrichtung und der Querneigungs-Erfassungseinrichtung derart zusammen, dass die Steuereinrichtung die Steuersignale zur Ansteuerung der Hubeinrichtungen der hinteren Laufwerke in Abhängigkeit sowohl von den Abstandswerten als auch den Querneigungswerten erzeugt, wobei die Hubeinrichtungen zumindest die beiden hinteren Laufwerke derart angesteuert werden, dass die Längsachse der Fräswalze im Wesentlichen parallel zu der zu bearbeitenden Bodenoberfläche ausgerichtet ist. Dabei kann die Hubeinrichtung des in Arbeitsrichtung linken (rechten) Laufwerks in Abhängigkeit von den Abstandswerten und die Hubeinrichtung des in Arbeitsrichtung der Baumaschine rechten (linken) Laufwerks in Abhängigkeit von den Querneigungswerten erfolgen. Allein entscheidend ist, dass die Querneigungswerte aufgenommen werden und bei der Steuerung der hinteren Laufwerke Berücksichtigung finden. Dies schließt nicht aus, dass noch weitere Größen bei der Steuerung Berücksichtigung finden können.

Die Querneigungs-Erfassungseinrichtung erlaubt also die "Abtastung" der Bodenoberfläche des unbearbeiteten Bodens, dessen Querneigung als Sollwert für die Querneigung des bearbeiteten Bodens angenommen werden kann, so dass die Oberfläche des später gefrästen Bodens dieselbe Querneigung wie die Oberfläche des noch nicht gefrästen Bodens hat (Kopierfräsen). Daher ist die Vermessung der Verkehrsfläche vor Aufnahme der Fräsarbeiten und die Vorgabe der Daten beispielsweise durch Anbringung von Markierungen auf der Fahrbahn nicht erforderlich.

Eine Ausführungsform der erfindungsgemäßen Bodenfräsmaschine sieht vor, dass die Steuereinrichtung derart konfiguriert ist, dass die während des Vorschubs der Bodenfräsmaschine von der Querneigungs-Erfassungseinrichtung ermittelten Querneigungswerte überwacht werden, wobei nach der Feststellung einer Änderung der Querneigung zwischen aufeinanderfolgenden Wegpunkten der von der Bodenfräsmaschine zurückgelegten Wegstrecke zumindest eine der Hubeinrichtungen der hinteren Laufwerke um einen Betrag eingefahren oder ausgefahren wird, dass die Längsachse der Fräswalze wieder im Wesentlichen parallel zu der zu bearbeitenden Bodenoberfläche ausgerichtet wird. Eine der beiden hinteren Laufwerke wird also in der Höhe so verstellt, dass eine Änderung der Querneigung der abzufräsenden Straße wieder ausgeglichen wird. Die Steuerung (Regelung) erfolgt vorzugsweise kontinuierlich, wobei der Abstand zwischen aufeinanderfolgenden Wegepunkten möglichst klein sein sollte, was bei einem digitalen Regler durch die Taktfrequenz bestimmt wird. Es ist aber grundsätzlich auch möglich eine Korrektur der Einstellung der Laufwerke in bestimmten (größeren) Zeitintervallen bzw. nach Zurücklegen bestimmter (größerer) Wegstrecken vorzunehmen.

Die Fräswalze kann bei der erfindungsgemäßen Bodenfräsmaschine am Maschinenrahmen in Arbeitsrichtung zwischen den vorderen und hinteren Laufwerken, beispielsweise in der Mitte des Maschinenrahmens, oder zwischen den hinteren Laufwerken angeordnet sein. Bei beiden Anordnungen ist die Fräswalze am Maschinenrahmen in Arbeitsrichtung hinter den vorderen Laufwerken angeordnet. Daher ergibt sich beim Vorschub der Bodenfräsmaschine zwischen dem Zeitpunkt bzw. dem Zeitintervall der "Abtastung" der Straßenoberfläche mit der Querneigungs-Erfassungseinrichtung und dem Zeitpunkt bzw. dem Zeitintervall des Abfräsens der Straße ein zeitlicher Versatz. Es hat sich jedoch gezeigt, dass in der Praxis die Steuerung auch ohne Berücksichtigung dieses zeitlichen Versatzes ausreichend ist. Eine besonders bevorzugte Ausführungsform sieht aber vor, dass die Steuereinrichtung derart konfiguriert ist, dass nach der Feststellung einer Änderung der Querneigung zwischen aufeinanderfolgenden Wegpunkten das Einfahren oder Ausfahren einer der Hubeinrichtungen der hinteren Laufwerke erst nach Ablauf eines vorgegebenen Zeitintervalls oder nach Zurücklegen einer vorgegebenen Wegstrecke erfolgt. Die Steuereinrichtung kann derart konfiguriert sein, dass die Bestimmung des vorgegebenen Zeitintervalls oder der vorgegebenen Wegstrecke in Abhängigkeit von der Vorschubgeschwindigkeit der Bodenfräsmaschine erfolgt.

Die Steuereinrichtung kann zur gegebenenfalls späteren (zeitversetzten) Verarbeitung der Daten eine Speichereinheit zum Speichern von zu aufeinanderfolgenden Zeitpunkten und/oder an aufeinanderfolgenden Wegpunkten von der Querneigungswert-Erfassungseinrichtung ermittelten Querneigungswerten aufweisen. Die von der Bodenfräsmaschine zurückgelegte Wegstrecke kann beispielsweise mit einem Wegstreckenzähler erfasst werden, wobei die an den einzelnen Wegpunkten erfassten Querneigungswerte in die Speichereinheit eingelesen werden, so dass die Querneigungswerte zwischengespeichert werden. Die Querneigungswerte können dann zu dem Zeitpunkt, an dem die Fräswalze die Stelle erreicht, an dem der betreffende Querneigungswerte aufgenommen worden ist, aus der Speichereinheit ausgelesen und zur Korrektur der Hubstellung der betreffenden Hubeinrichtung herangezogen werden.

Die Abstands-Messeinrichtung kann mindestens einen Abstandssensor aufweisen, der ein taktiler Abstandssensor oder ein berührungsloser Abstandssensor ist. Derartige Abstands-Messsysteme gehören zum Stand der Technik. Beispielsweise kann auch der im Allgemeinen neben der Fräswalze vorgesehene Kantenschutz einer Straßenfräsmaschine als taktiler Sensor der Abstands-Messeinrichtung fungieren. Als berührungslose Abstandssensoren können beispielsweise optische oder induktive oder kapazitive Abstandssensoren oder Ultraschall-Abstandssensoren verwendet werden. Die Abstandsmessung kann eine Punktmessung sein. In der Praxis sehen die bekannten Abstandssensoren aber die Messung in Bezug auf eine Fläche vor, beispielsweise eine kreisförmige Fläche bei einem Ultraschallsensor oder die Aufstandsfläche eines Kantenschutzes. Unter Multiplex versteht man in diesem Zusammenhang eine entlang der Fahrtrichtung versetzte Anordnung von mehreren (drei, fünf, sieben) Abstands-Messeinrichtungen und die Verwendung deren Mittelwerts als Abstandswert.

Die Abstands-Messeinrichtung kann derart ausgebildet sein, dass der auf den Maschinenrahmen bezogene Referenzpunkt auf einer Längsseite des Maschinenrahmens, vorzugsweise seitlich neben der Fräswalze, besonders bevorzugt in einer Vertikalebene liegt, in der die Fräswalzenachse liegt.

Zur Ermittlung der Querneigungswerte kann die Querneigungs-Erfassungseinrichtung einen in Arbeitsrichtung linken Sensor aufweisen, welcher auf die Stellung des vorderen linken Laufwerks in Bezug auf den Maschinenrahmen bezogene linke Abstandswerte und einen in Arbeitsrichtung rechten Sensor aufweisen, welcher auf die Stellung des vorderen rechten Laufwerks in Bezug auf den Maschinenrahmen bezogene rechte Abstandswerte umfasst. Die Abstandswerte können beispielsweise aus den Hubstellungen der den vorderen Laufwerken zugeordneten Hubeinrichtungen gewonnen werden, wobei die Hubstellungen der Hubeinrichtungen mit den bekannten Wegstreckensensoren erfasst werden können. Separate Messeinrichtungen oder in Hubeinrichtungen integrierte Messeinrichtungen gehören zum Stand der Technik.

Wenn die erfindungsgemäße Bodenfräsmaschine beispielsweise bei einer Straße die rechte Fahrbahnseite bzw. einen rechtsseitigen Fahrbahnabschnitt abfräsen soll (Rechtsverkehr), wobei auf der rechten Seite der Straße eine geeignete Referenzfläche nicht zur Verfügung steht, kann die Abstands-Messeinrichtung den Abstand zwischen einem auf der Höhe der Fräswalze liegenden Referenzpunkt und der Straßenoberfläche an der rechten Seite des Maschinenrahmen nicht messen, um die Frästiefe mit der rechten hinteren Hubeinrichtung einstellen zu können.

Für diesen Anwendungsfall kann die Steuereinrichtung derart konfiguriert sein, dass in Abhängigkeit von den ermittelten Querneigungswerten die Hubeinrichtung des hinteren rechten Laufwerks eingefahren wird, wenn sich beim Vorschub der Bodenfräsmaschine der linke Abstandswert verringert und der rechte Abstandswert vergrößert, und die Hubeinrichtung des hinteren rechten Laufwerks ausgefahren wird, wenn sich beim Vorschub der Bodenfräsmaschine der linke Abstandswert vergrößert und der rechte Abstandswert verringert, so dass die Längsachse der Fräswalze während des Vorschubs der Bodenfräsmaschine im Wesentlichen parallel zu der Oberfläche des nicht bearbeiteten Bodens verbleibt. Dabei wird die Frästiefe mit der Hubeinrichtung des hinteren linken Laufwerks eingestellt, wobei deren Hubstellung in Abhängigkeit von den ermittelten Abstandswerten der Abstands-Messeinrichtung gesteuert wird. In analoger Betrachtungsweise kann die Frästiefe auch mit der Hubeinrichtung des hinteren rechten Laufwerks in Abhängigkeit von den ermittelten Abstandswerten und die Querneigung mit der Hubeinrichtung des hinteren linken Laufwerks in Abhängigkeit von den ermittelten Querneigungswerten geregelt werden.

Die Steuereinrichtung kann derart konfiguriert sein, dass beim Vorschub der Bodenfräsmaschine die Hubstellung der Hubeinrichtung des hinteren rechten Laufwerks derart eingestellt wird, dass die Differenz der mit dem linken Abstandssensor und dem rechten Abstandssensor gemessenen Abstandswerte minimiert wird. Bei diesem Ausführungsbeispiel braucht die Querneigung des Maschinenrahmens gegenüber der Horizontalen nicht bestimmt zu werden.

Darüber hinaus kann die Steuerung des hinteren rechten Laufwerks derart erfolgen, dass aus den linken und rechten Abstandswerten und die Querneigung der Bodenoberfläche quer zur Arbeitsrichtung der Bodenfräsmaschine in Bezug auf eine Bezugsebene des Maschinenrahmens beschreibende Querneigungswerte ermittelt werden, und aus den Querneigungswerten und den Maschinenrahmen-Neigungswerten für aufeinanderfolgende Wegpunkte Querneigungs-Sollwerte ermittelt werden, die mit den Maschinenrahmen-Neigungswerten verglichen werden, wobei beim Vorschub der Bodenfräsmaschine die Hubstellung der Hubeinrichtung des hinteren rechten Laufwerks derart eingestellt wird, dass die Differenz zwischen den Querneigungs-Sollwerten und den Maschinenrahmen-Neigungswerten minimiert wird.

Im Folgenden wird ein Ausführungsbeispiel der erfindungsgemäßen Bodenfräsmaschine unter Bezugnahme auf die Zeichnungen im Einzelnen beschrieben.

Es zeigen:

Fig. 1    ein Ausführungsbeispiel der erfindungsgemäßen Bodenfräsmaschine in der Seitenansicht,

Fig. 2    die einzelnen Komponenten der Bodenfräsmaschine in vereinfachter schematischer Darstellung,

Fig. 3A    eine Draufsicht auf eine Straße, die von der Bodenfräsmaschine bearbeitet wird, wobei die Bodenfräsmaschine einen fahrbahnaußenseitigen Streckenabschnitt bearbeitet,

Fig. 3B    der Querneigungsverlauf der zu bearbeitenden Straße,

Fig. 4A    eine Rückansicht der Bodenfräsmaschine beim Abfräsen des Straßenbelags, in der die gefräste Bodenoberfläche und die hinteren Laufwerke der Bodenfräsmaschine dargestellt sind, wobei sich die Bodenfräsmaschine an einer ersten Position befindet,

Fig. 4B    eine Ansicht der auf dem nicht gefrästen Boden aufstehenden vorderen Laufwerke und die Hubstellung der den vorderen Laufwerken zugeordneten Hubeinrichtungen in der ersten Position,

Fig. 4C    eine vereinfachte schematische Darstellung eines weiteren Ausführungsbeispiels einer pendelnden Lagerung der vorderen Laufwerke,

Fig. 5A    eine Rückansicht der Bodenfräsmaschine beim Abfräsen des Straßenbelags, wobei sich die Bodenfräsmaschine an einer zweiten Position befindet,

Fig. 5B    eine Ansicht der vorderen Laufwerke und deren Hubeinrichtungen,

Fig. 6A    eine Rückansicht der Bodenfräsmaschine beim Abfräsen des Straßenbelags, wobei sich die Bodenfräsmaschine an einer dritten Position befindet,

Fig. 6B    eine Ansicht der vorderen Laufwerke und deren Hubeinrichtungen,

Fig. 7A    eine Rückansicht der Bodenfräsmaschine beim Abfräsen des Straßenbelags, wobei sich die Bodenfräsmaschine an einer vierten Position befindet,

Fig. 7B    eine Ansicht der vorderen Laufwerke und deren Hubeinrichtungen,

Fig. 8A    eine Rückansicht der Bodenfräsmaschine beim Abfräsen des Straßenbelags, wobei sich die Bodenfräsmaschine an einer fünften Position befindet,

Fig. 8B    eine Ansicht der vorderen Laufwerke und deren Hubeinrichtungen,

Fig. 9A    eine Rückansicht der Bodenfräsmaschine beim Abfräsen des Straßenbelags, wobei sich die Bodenfräsmaschine an einer sechsten Position befindet,

Fig. 9B    eine Ansicht der vorderen Laufwerke und deren Hubeinrichtungen,

Fig. 10A    eine Rückansicht der Bodenfräsmaschine beim Abfräsen des Straßenbelags, wobei sich die Bodenfräsmaschine an einer siebten Position befindet,

Fig. 10B    eine Ansicht der vorderen Laufwerke und deren Hubeinrichtungen,

Fig. 11A    eine Rückansicht der Bodenfräsmaschine beim Abfräsen des Straßenbelags, wobei sich die Bodenfräsmaschine an einer achten Position befindet,

Fig.11B    eine Ansicht der vorderen Laufwerke und deren Hubeinrichtungen,

Fig. 12A    eine Rückansicht der Bodenfräsmaschine beim Abfräsen des Straßenbelags, wobei sich die Bodenfräsmaschine an einer neunten Position befindet,

Fig.12B    eine Ansicht der vorderen Laufwerke und deren Hubeinrichtungen,

Fig. 13    eine Tabelle mit Zahlenwerten zur Veranschaulichung der Hubbewegung der Hubeinrichtungen der vorderen Laufwerke,

Fig. 14    ein Blockschaltbild zur Veranschaulichung eines Ausführungsbeispiels der Steuereinrichtung der Bodenfräsmaschine und

Fig. 15    ein Blockschaltbild zur Veranschaulichung eines weiteren Ausführungsbeispiels der Steuereinrichtung der Bodenfräsmaschine.

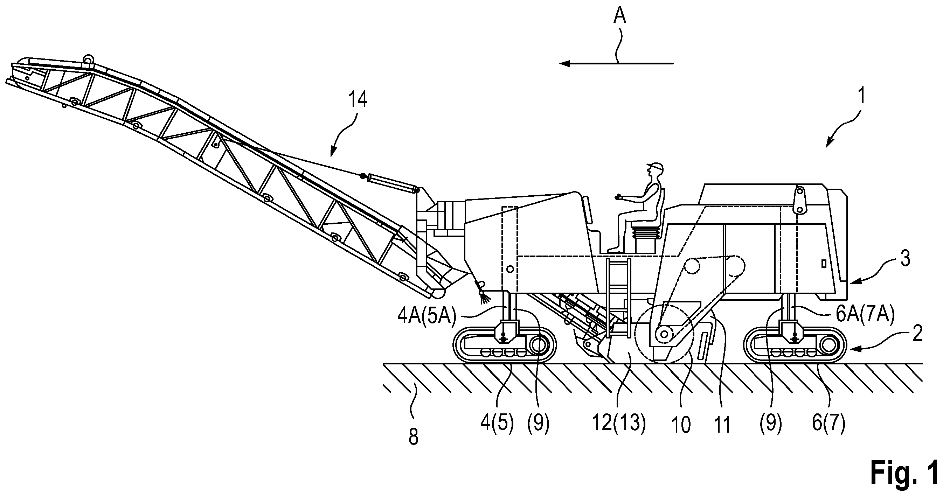

Fig. 1 zeigt ein Ausführungsbeispiel einer selbstfahrenden Bodenfräsmaschine 1 zum Abfräsen von Straßenbelägen in der Seitenansicht. Die Bodenfräsmaschine 1 verfügt über ein Fahrwerk 2 und einen Maschinenrahmen 3. Das Fahrwerk 2 weist ein in Arbeitsrichtung A vorderes linkes Laufwerk 4 und ein vorderes rechtes Laufwerk 5 sowie ein hinteres linkes Laufwerk 6 und ein hinteres rechtes Laufwerk 7 auf. Als Laufwerke können Kettenlaufwerke oder Räder vorgesehen sein.

Zur Verstellung der Höhe und/oder Neigung des Maschinenrahmens 3 gegenüber der Oberfläche des Bodens (Straßenoberfläche) weist die Bodenfräsmaschine den einzelnen Laufwerken 4, 5, 6, 7 zugeordnete Hubeinrichtungen 4A, 5A, 6A, 7A auf, von denen der Maschinenrahmen 3 getragen wird. Die Hubeinrichtungen 4A, 5A, 6A, 7A weisen zum Verstellen der Laufwerke jeweils eine Kolben/ZylinderAnordnung 9 auf.

Die Bodenfräsmaschine 1 verfügt weiterhin über eine mit Fräswerkzeugen bestückte Fräswalze 10, die am Maschinenrahmen 3 zwischen den vorderen und hinteren Laufwerken 4, 5, 6, 7 in einem Fräswalzengehäuse 11 angeordnet ist, welches an den Längsseiten von einem linken und rechten Kantenschutz 12, 13 verschlossen ist.

Durch Einfahren und Ausfahren der Kolben/Zylinder-Anordnungen 9 der Hubeinrichtungen 4A, 5A, 6A, 7A kann die Höhe und/oder Neigung des Maschinenrahmens 3 und der am Maschinenrahmen angeordneten Fräswalze 10 gegenüber der Bodenoberfläche 8 eingestellt werden. Zum Abtransport des gefrästen Straßenbelags ist eine Fördereinrichtung 14 mit einem Förderband vorgesehen.

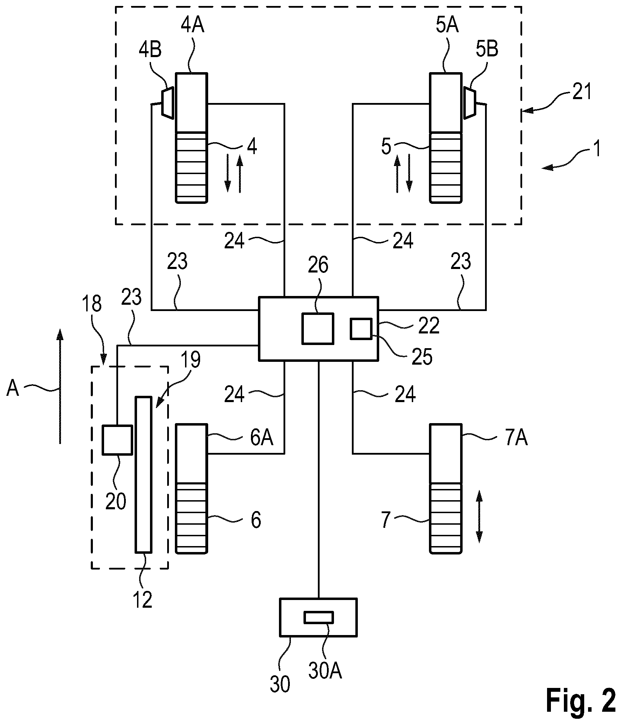

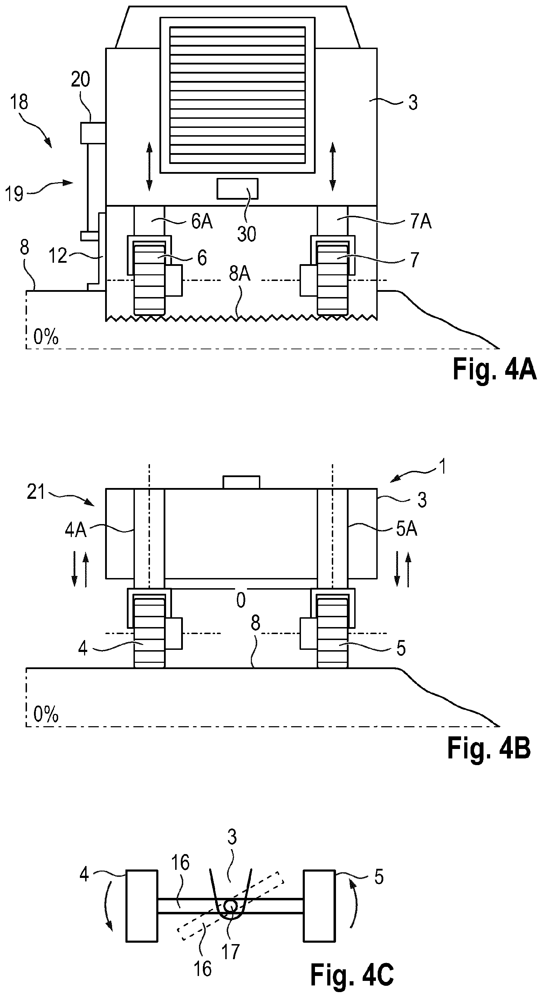

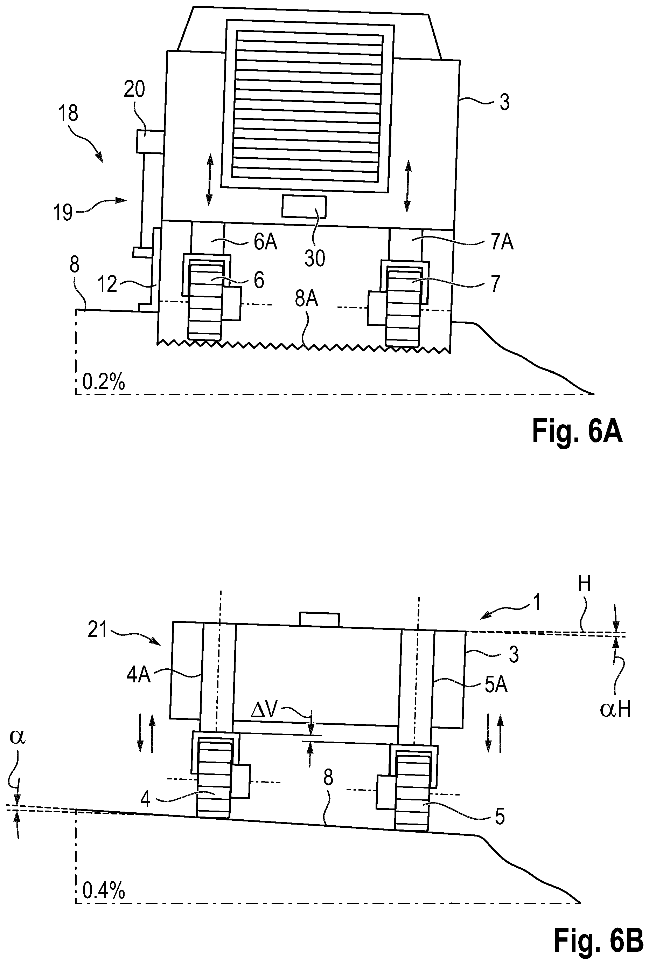

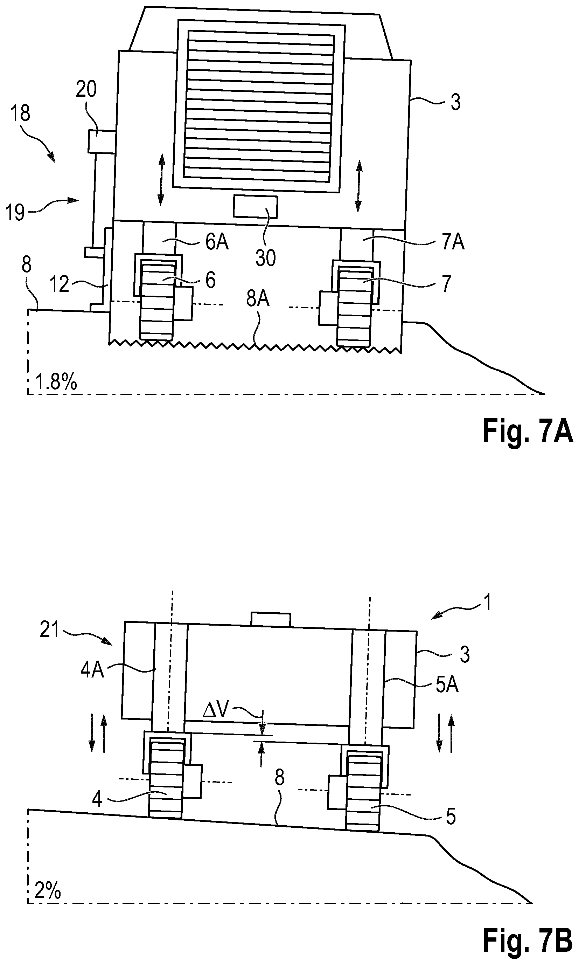

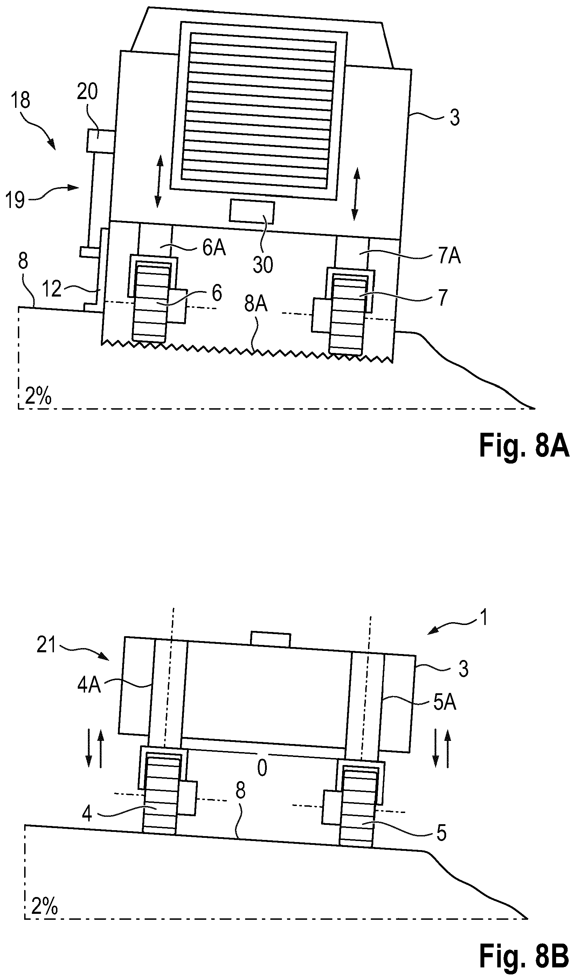

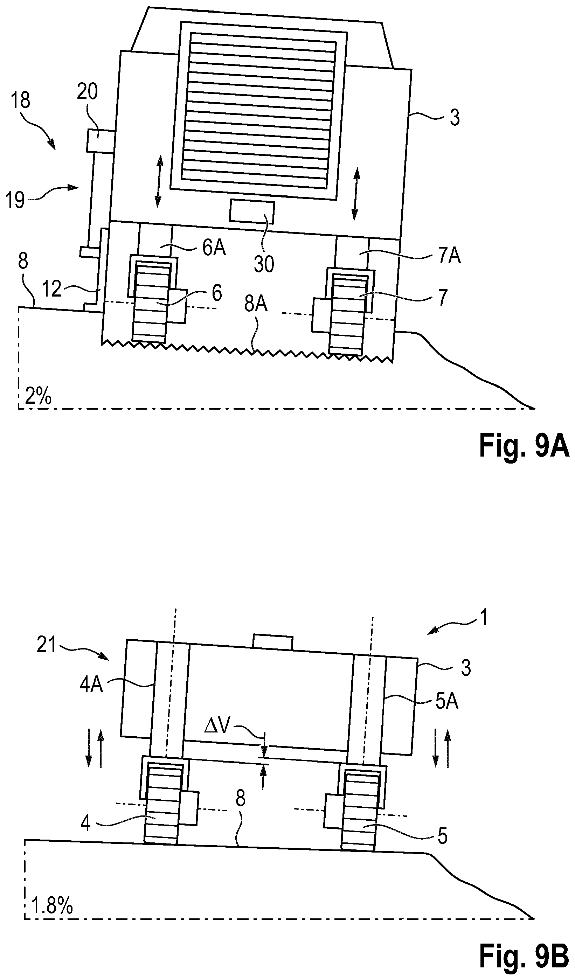

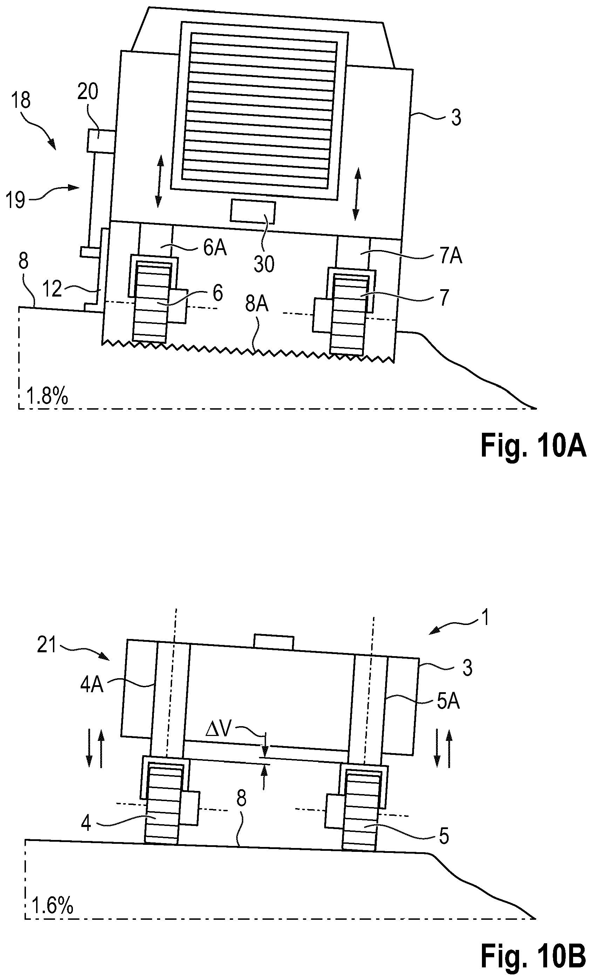

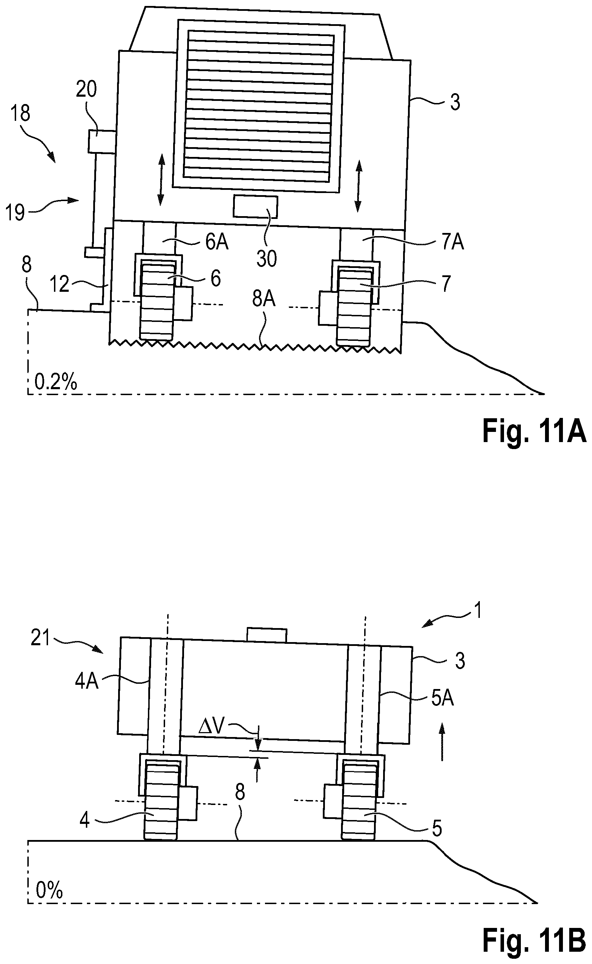

Fig. 2 zeigt die einzelnen Komponenten der Bodenfräsmaschine 1 in vereinfachter schematischer Darstellung. Die Figuren 4A bis 12A zeigen eine Rückansicht der Bodenfräsmaschine 1 beim Abfräsen des Straßenbelags, in der die ursprüngliche Bodenoberfläche 8 und die gefräste Bodenoberfläche 8A und die hinteren Laufwerke 6, 7 der Bodenfräsmaschine 1 dargestellt sind, und die Figuren 4B bis 12B zeigen eine Ansicht der auf dem nicht gefrästen Boden aufstehenden vorderen Laufwerke 4, 5 und die Hubstellung der den vorderen Laufwerken zugeordneten Hubeinrichtungen 4A und 5A.

Die mit "A" und "B" bezeichneten Figuren (z. B. Fig. 4A und Fig. 4B) zeigen die Bodenfräsmaschine 1 jeweils zu demselben Zeitpunkt, zu dem sich in Längsrichtung des Maschinenrahmens 3 gesehen (Arbeitsrichtung) die Aufstandspunkte 4', 5' der vorderen Laufwerke 4, 5 in einem Abstand I (Radstand) vor den Aufstandspunkten 6', 7' der hinteren Laufwerke 6, 7 befinden.

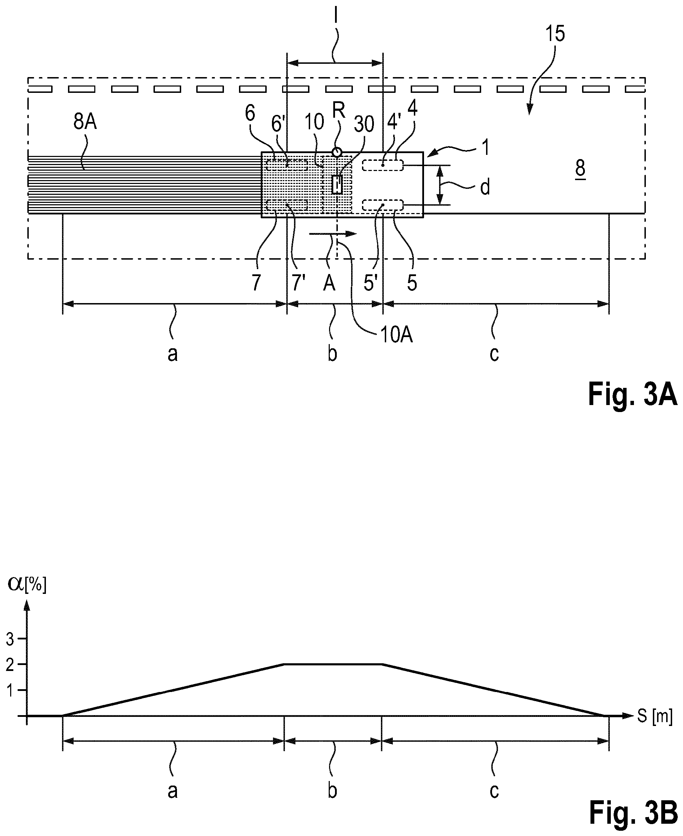

Fig. 3A zeigt eine Draufsicht auf die Bodenfräsmaschine 1 in stark vereinfachter schematischer Darstellung, wobei die Bodenfräsmaschine 1 einen Belag von einem rechtseitigen Streckenabschnitt einer Straße 15 abfräst. Die einzelnen Komponenten sind in den Figuren mit den gleichen Bezugszeichen versehen.

Die vorderen Laufwerke 4, 5 der Bodenfräsmaschine 1 sind derart miteinander zwangsgekoppelt, dass ein Anheben des linken vorderen Laufwerks 4 ein Absenken des rechten vorderen Laufwerks 5 und ein Absenken des linken vorderen Laufwerks 4 ein Anheben des rechten vorderen Laufwerks 5 bewirkt. Eine derartige Kopplung der Laufwerke kann mechanisch oder hydraulisch erfolgen. Eine mechanische und hydraulische Kopplung der Laufwerke ist beispielsweise in der DE 196 17 442 C1 beschrieben.

Fig. 4C zeigt eine alternative Ausführungsform einer pendelnden Lagerung der vorderen, linken und rechten Laufwerke 4, 5. Die beiden Laufwerke 4, 5 sind an einer Pendelachse 16 befestigt, welche um eine Längsachse 17 des Maschinenrahmens 3 pendelnd gelagert ist. Eine derartige pendelnde Lagerung ist beispielsweise in der DE 102 10 763 A1 beschrieben.

Bei dem vorliegenden Ausführungsbeispiel führt das Einfahren (Ausfahren) der Hubeinrichtung 6A (Kolben/-Zylinder-Anordnung) des hinteren linken Laufwerks 6 zu einem Anheben (Absenken) des linken Laufwerks 6 in Bezug auf den Maschinenrahmen 3, wodurch sich der Maschinenrahmen an der linken Seite absenkt (anhebt), und das Einfahren (Ausfahren) der Hubeinrichtung 7A (Kolben/Zylinder-Anordnung) des hinteren rechten Laufwerks 7 führt zu einem Anheben (Absenken) des rechten Laufwerks 7 in Bezug auf den Maschinenrahmen 3, wodurch sich der Maschinenrahmen 3 an der rechten Seite absenkt (anhebt).

Die Bodenfräsmaschine 1 verfügt über eine Abstands-Messeinrichtung 18, die derart ausgebildet ist, dass der Abstand zwischen einem auf den Maschinenrahmen 3 bezogenen Referenzpunkt R (Fig. 3A) und der Bodenoberfläche 8 gemessen wird. Bei dem vorliegenden Ausführungsbeispiel weist die Abstands-Messeinrichtung 18 einen Abstandssensor 19 auf, der auf der in Arbeitsrichtung linken Seite des Maschinenrahmens 3 zwischen den vorderen und hinteren Laufwerken seitlich neben der Fräswalze 10 angeordnet ist (Fig. 3A). Dieser Abstandssensor 19 ist bei dem vorliegenden Ausführungsbeispiel ein taktiler Abstandssensor, der von dem linken Kantenschutz 12 Gebrauch macht, an dem ein Seilzugsensor 20 befestigt ist (Fig. 4A). Wenn der Kantenschutz 12 über zwei in Fahrtrichtung versetzt angeordnete Hydraulikzylinder höhenverstellbar befestigt ist, kann die Höhe des Kantenschutzes anstelle mittels eines Seilzugsensors auch mittels eines in die Hydraulikzylinder integrierten Wegmesssystems erfasst werden. Der Kantenschutz 12 liegt auf der Bodenoberfläche 8 auf. Der Seilzugsensor 20 misst die Wegstrecke, um die sich der Kantenschutz 12 auf und ab bewegt. Folglich kann der Abstand zwischen dem Referenzpunkt R und der Bodenoberfläche 12, auf dem der Kantenschutz 12 aufliegt, gemessen werden.

Des Weiteren weist die Bodenfräsmaschine 1 eine Querneigungs-Erfassungseinrichtung 21 auf, welche derart ausgebildet ist, dass an jedem Wegpunkt die Querneigung des Maschinenrahmens 3 bzw. der Längsachse der Fräswalze 10A in Bezug auf die Oberfläche des Bodens aus der Hubstellung der Hubeinrichtungen 4A, 5A der vorderen Laufwerke 4, 5 oder bei der alternativen Ausführungsform aus der Stellung der Pendelachse 16 erfasst werden kann. Die jeweiligen Wegpunkte entsprechen den Aufstandspunkten der vorderen Laufwerke. Bei dem vorliegenden Ausführungsbeispiel umfasst das vordere linke Laufwerk 4 einen linken Abstandssensor 4B, welcher auf die Stellung des vorderen linken Laufwerks in Bezug auf den Maschinenrahmen 3 bezogene linke Abstandswerte VL ermittelt, und einen rechten Abstandssensor 5B, welcher auf die Stellung des vorderen rechten Laufwerks 5 in Bezug auf den Maschinenrahmen 3 bezogene rechte Abstandswerte VR ermittelt. Die Abstandssensoren 4B, 5B können integrierte Wegmesssysteme der den Laufwerken 4, 5 zugeordneten Hubeinrichtungen 4A, 5A sein.

Darüber hinaus verfügt die Bodenfräsmaschine 1 über eine Steuereinrichtung 22, die eine selbstständige Baugruppe bilden oder zumindest teilweise Bestandteil der zentralen Steuer- und Recheneinheit der Baumaschine sein kann. Die Steuereinrichtung 22 kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen, um die Ansteuerung der Hubeinrichtungen und die Aufnahme und Auswertung der Messwerte auszuführen. Auf den Hardware-Komponenten kann ein Datenverarbeitungsprogramm (Software) laufen. Es ist auch eine Kombination der verschiedenen Komponenten möglich.

Die Steuereinrichtung 22 ist über Signalleitungen 23 bzw. Datenleitungen mit dem Seilzugsensor 20 der Abstands-Messeinrichtung 18 und den Abstandssensoren 4B, 5B der Querneigungs-Erfassungseinrichtung 21 verbunden und erzeugt Steuersignale für die Hubeinrichtungen 4A, 5A, 6A, 7A. Die Hubeinrichtungen 4A, 5A, 6A, 7A sind derart ausgebildet, dass deren Kolben/Zylinder-Anordnungen in Abhängigkeit von den Steuersignalen ein- bzw. ausgefahren werden, so dass die Laufwerke 4, 5, 6, 7 gegenüber dem Maschinenrahmen 3 angehoben oder abgesenkt werden. Die Steuersignale werden über Steuer- bzw. Datenleitungen 24 übertragen.

Die Steuereinrichtung 22 ist derart konfiguriert, dass die nachfolgend beschriebenen Schritte des erfindungsgemäßen Verfahrens zum Steuern der Bodenfräsmaschine ausgeführt werden.

Bei dem vorliegenden Ausführungsbeispiel soll ein Belag von einer Straße abgefräst werden, welcher über den Streckenverlauf die in Fig. 3A gezeigt Querneigung $\alpha$ hat. Die Dicke des abgefrästen Belags bestimmt die Frästiefe. Der betrachtete Streckenabschnitt ist bei dem vorliegenden Ausführungsbeispiel eine Rechtskurve, dessen Querneigung sich zur Kurvenmitte erhöht, in der Kurvenmitte gleichbleibt und nach der Kurvenmitte wieder abnimmt. Es sei angenommen, dass der Streckenabschnitt der Straße einen Abschnitt a mit gleichförmig zunehmender Steigung (80 m), einen Abschnitt b mit gleichbleibender Steigung (8 m) und einen Abschnitt c mit gleichförmig abnehmender Steigung (80 m) hat. Der Abstand I zwischen den angenommenen Aufstandspunkten 4', 6' bzw. 5', 7' der vorderen und hinteren Laufwerke 4, 5, 6, 7 in Längsrichtung der Bodenfräsmaschine ist 8 m, wobei deren Abstand zu der mittig zwischen den Laufwerken 4, 5, 6, 7 angeordneten Fräswalze 10 4 m ist. Der Abstand d zwischen den Aufstandspunkten 4', 5' der vorderen Laufwerke 4, 5 in Querrichtung ist 1,6 m.

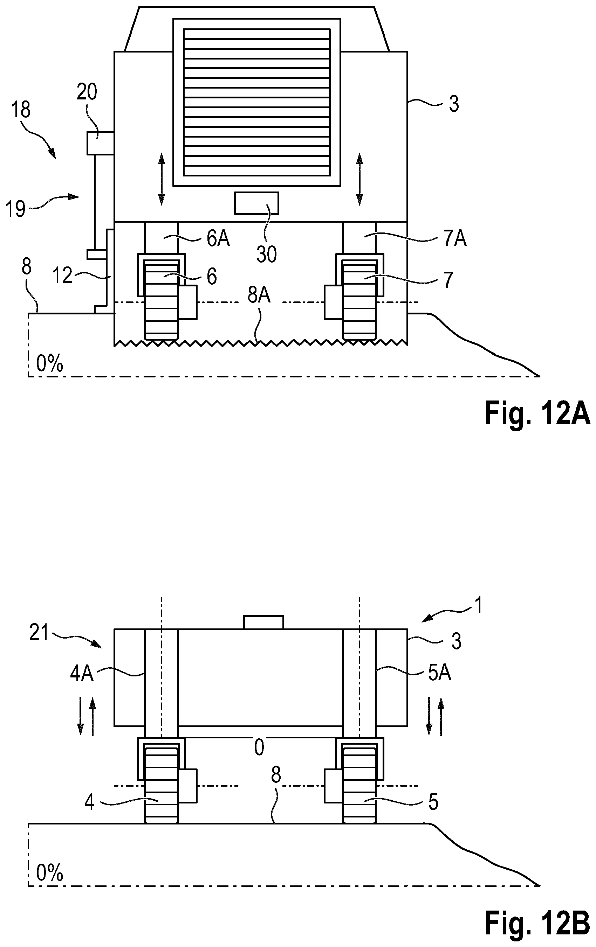

Die einzelnen Verfahrensschritte werden nachfolgend unter Bezugnahmen auf die Figuren 4A und 4B bis 12A und 12B beschrieben.

Zu Beginn der Fräsarbeiten wird die Abstands-Messeinrichtung 18 justiert, insbesondere der Nullpunkt eingestellt. Zur Einstellung des Nullpunktes werden bei horizontaler Ausrichtung der Bodenfräsmaschine die Hubeinrichtungen 4A, 5A, 6A, 7A derart eingestellt, dass die Fräswalze 10 die Bodenfläche 8 mit der von den Spitzen der Fräswerkzeuge beschriebenen zylindrischen Mantelfläche gerade eben berührt. Hierfür werden die Hubeinrichtungen 4A, 5A, 6A, 7A so lange eingefahren, bis die Fräswerkzeuge der sich drehenden Fräswalze 10 am Boden zu kratzen beginnen. Dieser Vorgang wird auch als Ankratzen bezeichnet. Wenn die Fräsmeißel die Bodenfläche 8 berühren, wird die Abstands-Messeinrichtung 18 auf null gesetzt. Wenn die Hubeinrichtungen 4A, 5A, 6A, 7A weiter eingefahren werden und die Fräswalze 10 in den Boden eindringt, werden negative Abstandswerte ermittelt. Der Betrag der Abstandswerte entspricht der Frästiefe. Bei dem vorliegenden Ausführungsbeispiel wird eine Frästiefe von 40 mm eingestellt. Hierzu wird das vordere linke Laufwerk 4 gemeinsam mit dem vorderen rechten Laufwerk 5 um 40 mm (VL, VR) und das hintere linke Laufwerk 6 um 40 mm (HL) und das hintere rechte Laufwerk 7 um 40 mm (HR) abgesenkt (Fig. 4A).

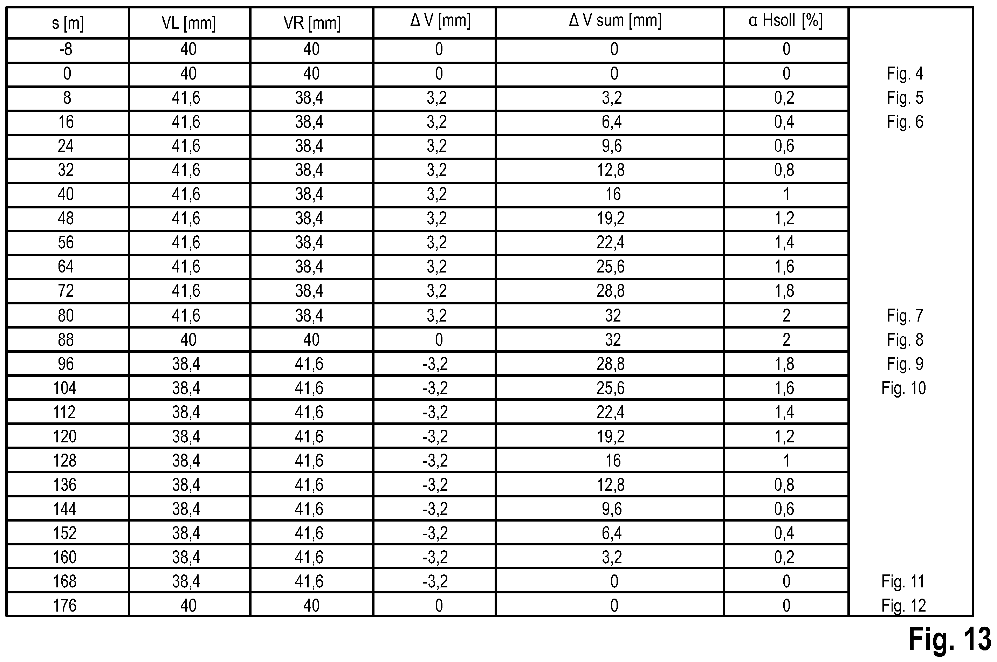

Fig. 13 zeigt eine Tabelle mit den entsprechenden Zahlenwerten zur Veranschaulichung der Hubbewegungen der Hubeinrichtungen 4A, 5A bzw. der Laufwerke 4, 5 für die einzelnen Positionen der Bodenfräsmaschine, die in den Figuren 4A und 4B bis 12A und 12B dargestellt sind. Die Figuren 4A und 4B bis 12A und 12B zeigen nicht sämtliche Positionen, da sich die Hubstellungen aufgrund des gleichförmigen Verlaufs der Querneigung wiederholen.

Nachfolgend wird ein erstes Ausführungsbeispiel der Steuereinrichtung beschrieben.

Während des Vorschubs der Straßenfräsmaschine empfängt die Steuereinrichtung 22 fortlaufend die Abstandswerte der Abstands-Messeinrichtung 18 sowie die linken und rechten Abstandswerte VL und VR der linken und rechten Abstandssensoren 4B, 5B der vorderen, linken und rechten Hubeinrichtungen 4A, 5A.

Die Steuereinrichtung 22 ist derart konfiguriert, dass fortlaufend die Differenz $\Delta V$ zwischen den linken und rechten Abstandswerten VL und VR gebildet wird. Ist die Differenz $\Delta V$ der linken und rechten Abstandswerte VL und VR gleich Null, ist die Querneigung $\alpha$ der ungefrästen Bodenoberfläche 8 relativ zum Maschinenrahmen 3 gleich Null. Ist die Differenz $\Delta V$ ungleich Null, ist die ungefräste Bodenoberfläche 8 zu der einen oder anderen Seite geneigt. Das Vorzeichen der Differenz $\Delta V$ gibt die Richtung der Neigung an.

Beim Vorschub der Bodenfräsmaschine 1 wird angestrebt, dass die Oberfläche 8A des gefrästen Bodens in der Querneigung der Oberfläche 8 des nicht gefrästen Bodens entspricht (Kopierfräsen). Daher ist der Maschinenrahmen 3 bzw. die Fräswalze 10 beim Vorschub der Maschine derart auszurichten, dass dieser bzw. diese der sich über den Streckenverlauf ändernden Querneigung $\alpha$ folgt, d. h. die Oberflächen 8 bzw. 8A parallel sind.

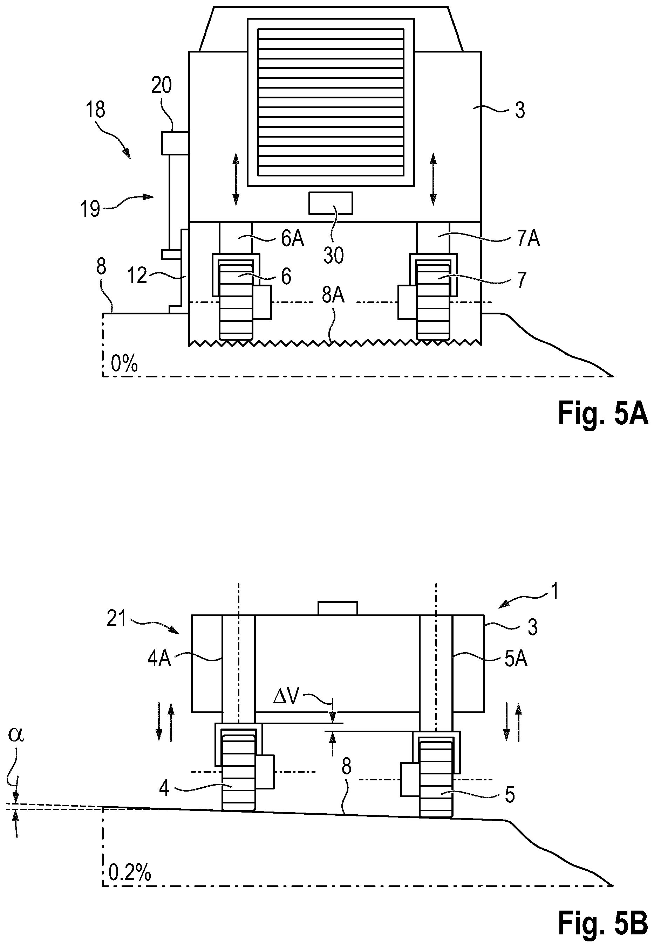

Die Figuren 4A und 4B zeigen die Ausgangssituation der Maschine, wobei die Querneigung $\alpha$ Null ist (Position 1). Dann ist die Differenz $\Delta V$ der linken und rechten Abstandswerte VL und VR gleich Null. Die Figuren 5A und 5B zeigen die Position der Maschine, in der die hinteren Laufwerke noch auf einem Abschnitt aufstehen, welcher eine Querneigung von 0% hat, während die vorderen Laufwerke schon auf einem Abschnitt aufstehen, der eine Querneigung von 0,2% hat (Fig. 5B). Da die vorderen Laufwerke 4, 5 gegenläufig gekoppelt sind, kann die Bodenfräsmaschine statisch als ein Dreibein beschrieben werden. Fig. 5B zeigt, dass der starre Maschinenrahmen 3 seine (horizontal ausgerichtete) Position beibehalten hat, und sich die Hubeinrichtung 4A des vorderen linken Laufwerks 4 um den linken Abstandswert VL eingefahren und die Hubeinrichtung 5A des vorderen rechten Laufwerks 5 um den rechten Abstandswert VR ausgefahren hat, weshalb die Differenz $\Delta V$ der linken und rechten Abstandswerte VL und VR ungleich Null ist. Da die Differenz $\Delta V$ ungleich Null ist, kann auf eine Änderung der Querneigung $\alpha$ geschlossen werden. In diesem Fall hat die Querneigung $\alpha$ für die betreffenden Wegpunkte von 0 auf 0,2% zugenommen. Die Steuereinrichtung 22 erzeugt nunmehr ein Steuersignal für die Hubeinrichtung 7A des hinteren rechten Laufwerks 7, um das hintere rechte Laufwerk 7 gegenüber dem Maschinenrahmen 3 um einen Betrag derart anzuheben, dass sich der Maschinenrahmen 3 gegenüber der Bodenoberfläche 8 bzw. 8A absenkt und die Fräswalzenachse 10A wieder parallel zu der Bodenoberfläche ausgerichtet ist. Dies ist dann der Fall, wenn die Differenz $\Delta V$ der linken und rechten Abstandswerte VL und VR wieder Null ist.

Die Steuereinrichtung 22 ist derart konfiguriert, dass der Hub der hinteren rechten Hubeinrichtung 7A derart geregelt wird, dass die Differenz $\Delta V$ der linken und rechten Abstandswerte VL und VR beim Vorschub der Maschine minimal wird, wobei die Regelung anstrebt, dass die Differenz $\Delta V$ Null ist.

Die übrigen Figuren zeigen in analoger Betrachtungsweise beispielhaft die Zunahme bzw. Abnahme der Querneigung um den gleichen Betrag (0,2%) in gleichen Streckenabschnitten (8 m) von einer zurückliegenden Position zu einer vorauseilenden Position sowie die Beibehaltung der Querneigung.

Bei der Steuerung (Regelung) ist zu berücksichtigen, dass die Querneigung der unbearbeiteten Straße nicht an einem Wegpunkt erfasst wird, an dem sich die Fräswalze 10 befindet, sondern an einem Wegpunkt, der von der Fräswalze 10 erst nach Zurücklegen einer bestimmten Wegstrecke bzw. nach Ablauf eines bestimmten von der Vorschubgeschwindigkeit der Straßenfräsmaschine abhängigen Zeitintervalls erreicht wird. Dieser Versatz kann bei der Steuerung Berücksichtigung finden, indem die linken und rechten Abstandswerte VL und VR und/oder die Differenz $\Delta V$ der linken und rechten Abstandswerte VL und VR zu bestimmten Zeitpunkten und/oder an bestimmten Wegpunkten in eine Speichereinheit 25 der Steuereinrichtung 22 eingelesen werden, um die Daten später auswerten und der Steuerung zugrunde legen zu können. Zum Festlegen der Wegpunkte und/oder der Zeitpunkte kann ein Wegstreckenzähler bzw. ein Zeitglied vorgesehen sein. Die Abstandswerte VL und VR können beispielsweise mit Zeit- und/oder Wegmarken markiert und in der Art einer Tabelle abgelegt werden. Die Steuereinrichtung 22 kann derart konfiguriert sein, dass zum Verstellen des hinteren rechten Laufwerks 7 für die korrekte Ausrichtung des Maschinenrahmens 3 bzw. der Fräswalze 10 zur Erzielung der gewünschten Querneigung diejenigen Werte aus der Speichereinheit ausgelesen werden, die dem momentanen Wegpunkt bzw. Zeitpunkt der Fräswalze 10 entsprechen.

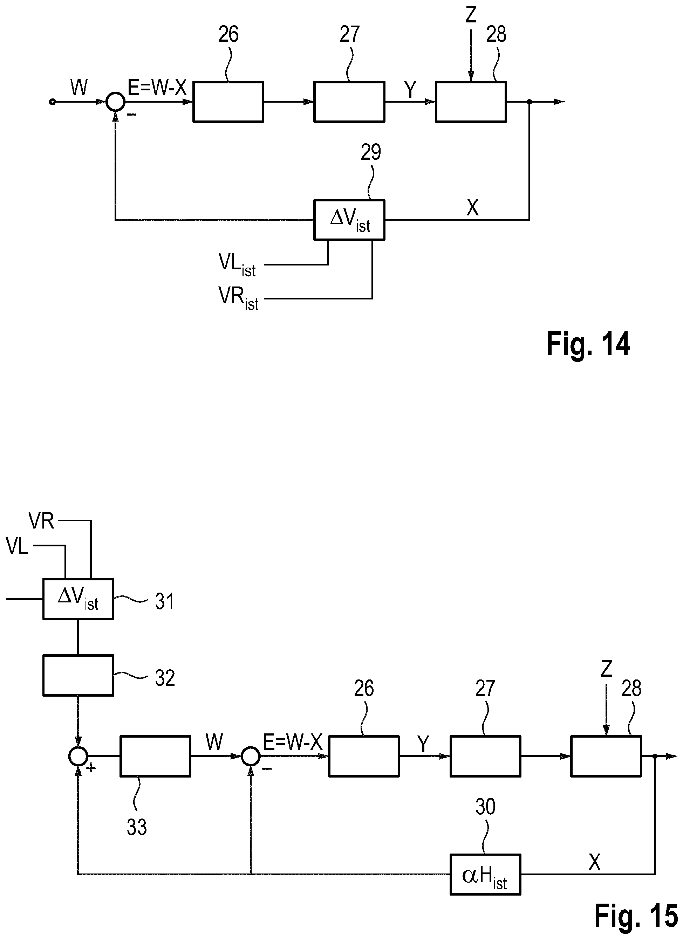

Fig. 14 zeigt ein Blockschaltbild eines Regelkreises mit einem Regler 26 für die erfindungsgemäße Steuerung.

Die Regelgröße X ist die Differenz $\Delta V$ist der vorderen, linken und rechten Abstandswerte VL und VR ($\Delta V$ist = VL - VR), welche mittels der Abstandssensoren 4B, 5B der Hubeinrichtungen 4A, 5A der vorderen, linken und rechten Laufwerke 4, 5 gemessen werden. Die Regelung strebt an, die Regelgröße X mit Hilfe der Stellgröße Y, die von einer Stelleinrichtung beeinflusst wird, auf die Führungsgröße W zu bringen, d. h. auf den Wert Null (∆Vsoll = VL - VR = 0), wobei die Regelabweichung E = W - X möglichst klein sein sollte.

Bei dem vorliegenden Regelkreis stellen die vorderen Laufwerke 4, 5 mit den Hubeinrichtungen 4A, 5A und den Abstandssensoren 4B, 5B die Messeinrichtung 29 des Regelkreises dar, um ∆Vist = VList - VRist (Regelgröße X) zu bestimmen. Die Hubeinrichtung 7A des hinteren rechten Laufwerks 7 repräsentiert die Stelleinrichtung 27 des Regelkreises. Das Steuersignal der Hubeinrichtung 7A des hinteren rechten Laufwerks 7 repräsentiert die Stellgröße Y.

Die Steuereinrichtung 22 (Regler 26) ist derart konfiguriert, dass die zeitveränderliche Regelgröße X durch Einfahren bzw. Ausfahren der Hubeinrichtung 7A des hinteren rechten Laufwerks 7 derart beeinflusst wird, dass die Regelabweichung E = W - X möglichst klein ist, d. h. ∆Vist = VList - VRist gleich Null ist. Bei der Regelung können noch auf die Regelstrecke 28 einwirkende Störgrößen Z berücksichtigt werden.

Nachfolgend wird ein weiteres Ausführungsbeispiel der erfindungsgemäßen Steuereinrichtung unter Bezugnahme auf Fig. 15 beschrieben, welche ein Blockschaltbild der alternativen Steuerung zeigt. Beim Kopierfräsen soll die Querneigung der gefrästen Straßenoberfläche der Querneigung der ungefrästen Straßenoberfläche entsprechen. Daher wird bei diesem Ausführungsbeispiel als Führungsgröße W der Regelung die Querneigung αHsoll der unbearbeiteten Straße gegenüber der Horizontalen H während des Vorschubs der Bodenfräsmaschine 1 fortlaufend bestimmt. Hierzu werden mit den linken und rechten Abstandsensoren 4B, 5B die Abstandswerte VL und VR des vorderen linken und rechten Laufwerks 4, 5 fortlaufend gemessen. Diese Abstandswerte werden in die Speichereinheit 25 der Steuereinrichtung 22 eingelesen. Für das vorliegende Ausführungsbeispiel ist der Speicherinhalt der Speichereinheit 25 der Tabelle (Fig. 13) zu entnehmen.

Zu Beginn der Fräsarbeiten (Fig. 4A und 4B) ist die Querneigung α des Maschinenrahmens 3 bzw. der Achse 10A der Fräswalze 10 gegenüber der unbearbeiteten horizontalen Bodenoberfläche 8 bzw. der Horizontalen H gleich Null (∆V=VL-VR=0, z.B. VL= VR= 40 mm). Wenn die Bodenfräsmaschine die in Fig. 5A und 5B gezeigte Position erreicht hat, stehen die vorderen linken und rechten Laufwerke 4, 5 auf einem Streckenabschnitt auf (Fig. 5B), an dem die Querneigung αH der Bodenoberfläche 8 des unbearbeiteten Bodens gegenüber der Horizontalen 0,2% ist (Fig. 5B). In analoger Betrachtungsweise ergeben sich für die dann folgenden Wegpunkte entsprechende Neigungswerte.

Während des Vorschubs der Bodenfräsmaschine werden die auf die Stellung des in Arbeitsrichtung vorderen, linken Laufwerks in Bezug auf den Maschinenrahmen 3 bezogenen linken Abstandswerte VL und die auf die Stellung des in Arbeitsrichtung vorderen rechten Laufwerks in Bezug auf den Maschinenrahmen bezogenen rechten Abstandswerte VR ermittelt. Aus den linken und rechten Abstandswerten VL und VR werden für aufeinanderfolgende Wegpunkte sn jeweils die Querneigung α der Bodenoberfläche 8 quer zur Arbeitsrichtung A der Bodenfräsmaschine 1 in Bezug auf eine Bezugsebene des Maschinenrahmens 3 beschreibende Querneigungswerte αrel ermittelt. Diese Bezugsebene ist hier eine Horizontalebene, wenn die Bodenfräsmaschine auf einem horizontalen Boden aufsteht und der linke Abstandswert VL gleich dem rechten Abstandswert VR ist (∆V= 0).

Wenn sich die Bodenfräsmaschine beispielsweise in der in den Figuren 5A und 5B gezeigten Position befindet, messen die Abstandssensoren 4A und 4B VL= 41,6 mm und VR = 38,4 mm. Aus VL= 41,6 mm und VR = 38,4 mm wird die Differenz ∆V = 41,6 mm - 38,4mm = 3,2 mm berechnet. Bei dem vorliegenden Ausführungsbeispiel ist der Abstand d zwischen den Aufstandspunkten 4', 5' der vorderen Laufwerke 4, 5 1600 mm. Aus ∆V und d wird die Querneigung αrel der Oberfläche 8 des ungefrästen Bodens gegenüber dem Maschinenrahmen 3 berechnet (3,2 mm/1600mm x 100% = 0,2 %), auf welchem die vorderen Laufwerke 4, 5 aufstehen.

Bei dem alternativen Ausführungsbeispiel weist die Bodenfräsmaschine eine Neigungsmesseinrichtung 30 mit einem Neigungssensor 30A auf, welche derart ausgebildet ist, dass die Neigung αHist des Maschinenrahmens 3 bzw. der Längsachse 10A der Fräswalze 10 gegenüber der Horizontalen H gemessen wird und die Neigung beschreibende Maschinenrahmen-Neigungswerte αHist ermittelt werden. Wenn die beiden Laufwerke 4, 5 beispielsweise auf einem unbearbeiteten Boden aufstehen, dessen Oberfläche in der Horizontalen H liegt, und die Hubeinrichtungen 4A, 5A dieselbe Hubstellung haben, misst die Neigungsmesseinrichtung 30 eine Neigung αHist = 0 (Fig. 4B).

Aus den Querneigungswerten αrel und den Maschinenrahmen-Neigungswerten αHist werden für aufeinanderfolgende Wegpunkte sn Querneigungs-Sollwerte αHsoll ermittelt, welche mit den Maschinenrahmen-Neigungswerten αHist verglichen werden, um die Hubstellung der Hubeinrichtung 7A des hinteren rechten Laufwerks 7 derart einzustellen, dass die Differenz zwischen den Querneigungs-Sollwerten αHsoll und den Maschinenrahmen-Neigungswerten αHist minimiert wird.

Die oben beschriebenen Schritte werden für die einzelnen Wegpunkte 1, 2, 3, 4, 5 ... sn fortlaufend ausgeführt, was aus der Tabelle (Fig. 13) ersichtlich ist. Die absolute Querneigung an einem in Arbeitsrichtung vorauseilenden Wegpunkt(sn+1) berechnet sich somit aus der an diesem Wegpunkt bestimmten relativen Querneigung αrelativ und der an dem in Arbeitsrichtung zurückliegenden Wegpunkt (sn) bestimmten absoluten Querneigung αabs. Dies wird anhand des folgenden Beispiels veranschaulicht:

$$\alpha abs(sn) = 0,2\% \quad [zurückliegender\ Wegpunkt]$$

$$\alpha relativ(sn+1) = 3{,}2mm/1600mm \times 100\% = 0{,}2\% \qquad [\text{vorauseilender Wegpunkt}]$$

$$\alpha abs(sn+1) = \alpha abs(sn) + \alpha relativ(sn+1) = 0{,}2\% + 0{,}2\% = 0{,}4\%$$

Auf diese Weise wird fortlaufend die Querneigung $\alpha abs$ der unbearbeiteten Bodenoberfläche 8 gegenüber der Horizontalen bestimmt, welche als Querneigungs-Sollwert $\alpha Hsoll$ zur Regelung herangezogen wird.

Die Querneigungs-Sollwerte $\alpha Hsoll$ (Führungsgröße W) werden durch Summenbildung aus der Querneigung $\alpha abs$ des Maschinenrahmens 3 bzw. der Längsachse 10A der Fräswalze A gegenüber der Horizontalen H und der Querneigung $\alpha rel$ des Maschinenrahmens gegenüber der unbearbeiteten Bodenoberfläche 8 ermittelt.

Das Blockschaltbild von Fig. 15 veranschaulicht die Steuerung des alternativen Ausführungsbeispiels. Die Neigungsmesseinrichtung 30 stellt die Messeinrichtung des Regelkreises dar. Das alternative Ausführungsbeispiel macht daher von einer zusätzlichen Neigungsmesseinrichtung 30 mit einem Neigungssensor 30A Gebrauch. Die Regelgröße X ist die mit der Neigungsmesseinrichtung 30 gemessene Querneigung $\alpha Hist$. Die Regelung strebt an, die Regelgröße X mit Hilfe der Stellgröße Y, die von der Stelleinrichtung 27 beeinflusst wird, auf die Führungsgröße W ($\alpha Hsoll$) zu bringen, wobei die Regelabweichung E = W - X möglichst klein sein sollte. Bei dem vorliegenden Regelkreis stellt die Hubeinrichtung 7A des hinteren rechten Laufwerks 7 die Stelleinrichtung 27 des Regelkreises dar. Das Steuersignal der Hubeinrichtung 7A des hinteren rechten Laufwerks 7 repräsentiert die Stellgröße Y.

Der Regler 26 ist derart konfiguriert, dass die zeitveränderliche Regelgröße X durch Einfahren bzw. Ausfahren der Hubeinrichtung 7A des hinteren rechten Laufwerks 7 derart beeinflusst wird, dass die Regelabweichung E = W - X möglichst klein ist. Bei dieser Regelung können noch auf die Regelstrecke 28 einwirkende Störgrößen Z berücksichtigt werden.

Das Blockschaltbild zeigt die Routine 31 zur Bestimmung von $\Delta Vist$ aus den Abstandswerten VL und VR ($\Delta Vist=VL-VR$). Die Routine 32 bestimmt aus $\Delta Vist$ fortlaufend die relative Querneigung $\alpha relativ$ der Oberfläche 8 des ungefrästen Bodens gegenüber dem Maschinenrahmen 3. Aus der relativen Querneigung $\alpha relativ$ wird durch Summenbildung die absolute Querneigung $\alpha absolut$ der Oberfläche 8 des ungefrästen Bodens gegenüber der Horizontalen bestimmt, welche später als Querneigungs-Sollwert $\alpha Hsoll$ zur Regelung herangezogen wird.

Da sich die Aufstandspunkte 4', 5' der vorderen Laufwerke 4, 5 im Abstand I zu den Aufstandspunkten 6', 7' der hinteren Laufwerke 6, 7 befinden, werden die fortlaufend ermittelten Werte für die absolute Querneigung $\alpha Habs$ der Bodenoberfläche 8 gegenüber der Horizontalen H als $\alpha Hsoll$ zwischengespeichert (Routine 33). Diese zwischengespeicherten Werte werden dann an dem betreffenden Wegpunkt als Sollwert (Führungsgröße W) für die Regelung wieder ausgelesen. Dieser Soll-Wert wird mit dem Ist-Wert der Querneigung $\alpha Hist$ des Maschinenrahmens 3 bzw. der Fräswalzenachse 10A gegenüber der Horizontalen H verglichen, welcher mit der Neigungsmesseinrichtung 30 gemessen wird (E=W-X).

**Patentansprüche**

**1.** Selbstfahrende Bodenfräsmaschine aufweisend:

einen Maschinenrahmen (3), der von einem Fahrwerk (2) getragen wird, welches ein vorderes linkes Laufwerk (4) und ein vorderes rechtes Laufwerk (5) und ein hinteres linkes Laufwerk (6) und ein hinteres rechtes Laufwerk (7) aufweist,
eine am Maschinenrahmen (3) angeordnete Fräswalze (10),
den vorderen und hinteren Laufwerken zugeordnete Hubeinrichtungen (4A, 5A, 6A, 7A), die zum Anheben oder Absenken der vorderen und hinteren Laufwerke (4, 5, 6, 7) gegenüber dem Maschinenrahmen (3) jeweils einfahrbar oder ausfahrbar sind, wobei die Hubeinrichtungen (4A, 5A, 6A, 7A) zumindest der vorderen Laufwerke (4, 5) derart miteinander zwangsgekoppelt sind, dass ein Anheben des linken vorderen Laufwerks ein Absenken des rechten vorderen Laufwerks und ein Absenken des linken vorderen Laufwerks ein Anheben des rechten vorderen Laufwerks bewirkt, oder
den hinteren Laufwerken (6, 7) zugeordnete Hubeinrichtungen (6A, 7A), die zum Anheben bzw. Absenken der hinteren Laufwerke (6, 7) gegenüber dem Maschinenrahmen (3) jeweils ein- bzw. ausfahrbar sind, wobei die vorderen Laufwerke (4, 5) in der Art einer pendelnden Lagerung mit dem Maschinenrahmen (3) derart verbunden sind, dass ein Anheben des linken vorderen Laufwerks ein Absenken des rechten vorderen Laufwerks und ein Absenken des linken vorderen Laufwerks ein Anheben des rechten vorderen Laufwerks bewirkt,
eine Abstands-Messeinrichtung (18), die derart ausgebildet ist, dass der Abstand zwischen einem auf den Maschinenrahmen (3) bezogenen Referenzpunkt (R) und der Bodenoberfläche (8) gemessen wird, wobei von der Abstands-Messeinrichtung (18) Abstandswerte ermittelt werden,

eine Steuereinrichtung (22), welche derart konfiguriert ist, dass Steuersignale für die Hubeinrichtungen (4A, 5A, 6A, 7A) erzeugt werden, wobei die Hubeinrichtungen (4A, 5A, 6A, 7A) derart ausgebildet sind, dass die Laufwerke (4, 5, 6, 7) in Abhängigkeit von den Steuersignalen eingefahren oder ausgefahren werden, **dadurch gekennzeichnet, dass**

eine Querneigungs-Erfassungseinrichtung (21) vorgesehen ist, welche derart ausgebildet ist, dass die Stellung des vorderen linken Laufwerks (4) und/oder des vorderen rechten Laufwerks (5) in Bezug auf den Maschinenrahmen (3) erfasst wird und aus der Stellung des vorderen linken Laufwerks (4) und/oder des vorderen rechten Laufwerks (5) die Querneigung der Bodenoberfläche (8) quer zur Arbeitsrichtung (A) der Bodenfräsmaschine beschreibende Querneigungswerte (VL, VR, $\Delta$V, $\alpha$) ermittelt werden, und

die Steuereinrichtung (22) mit der Abstands-Messeinrichtung (18) und der Querneigungs-Erfassungseinrichtung (21) zusammenwirkt, und die Steuereinrichtung (22) derart konfiguriert ist, dass die Steuereinrichtung die Steuersignale zur Ansteuerung der Hubeinrichtungen (6A, 7A) zumindest der hinteren Laufwerke (6, 7) in Abhängigkeit von zumindest den Abstandswerten der Abstands-Messeinrichtung (18) und den Querneigungswerten (VL, VR, $\Delta$V, $\alpha$) der Querneigungs-Erfassungseinrichtung (21) erzeugt, wobei zumindest die Hubeinrichtungen (6A, 7A) der hinteren Laufwerke derart angesteuert werden, dass die Längsachse (10A) der Fräswalze (10) im Wesentlichen parallel zu der zu bearbeitenden Bodenoberfläche (8) ausgerichtet ist.

2. Selbstfahrende Bodenfräsmaschine nach Anspruch 1, **dadurch gekennzeichnet, dass** die Steuereinrichtung (22) derart konfiguriert ist, dass die während des Vorschubs der Bodenfräsmaschine von der Querneigungs-Erfassungseinrichtung (22) ermittelten Querneigungswerte (VL, VR, $\Delta$V, $\alpha$) überwacht werden, wobei nach der Feststellung einer Änderung der Querneigung zwischen aufeinanderfolgenden Wegpunkten der von der Bodenfräsmaschine zurückgelegten Wegstrecke zumindest eine der Hubeinrichtungen (7A) der hinteren Laufwerke um einen Betrag eingefahren oder ausgefahren wird, dass die Längsachse (10A) der Fräswalze (10) wieder im Wesentlichen parallel zu der zu bearbeitenden Bodenoberfläche (8) ausgerichtet wird.

3. Selbstfahrende Bodenfräsmaschine nach Anspruch 2, **dadurch gekennzeichnet, dass** die Steuereinrichtung (22) derart konfiguriert ist, dass nach der Feststellung einer Änderung der Querneigung zwischen aufeinanderfolgenden Wegpunkten das Einfahren oder Ausfahren zumindest einer der Hubeinrichtungen (7A) der hinteren Laufwerke um den Betrag erst nach Ablauf eines vorgegebenen Zeitintervalls oder nach Zurücklegen einer vorgegebenen Wegstrecke erfolgt, wobei die Steuereinrichtung (22) derart konfiguriert ist, dass die Bestimmung des vorgegebenen Zeitintervalls in Abhängigkeit von der Vorschubgeschwindigkeit der Bodenfräsmaschine erfolgt.

4. Selbstfahrende Bodenfräsmaschine nach einem der Ansprüche 1 bis 3, **dadurch gekennzeichnet, dass** die Steuereinrichtung (22) eine Speichereinheit (25) zum Speichern von zu aufeinanderfolgenden Zeitpunkten und/oder an aufeinanderfolgenden Wegpunkten von der Querneigungswert-Erfassungseinrichtung ermittelten Querneigungswerten aufweist.

5. Selbstfahrende Bodenfräsmaschine nach einem der Ansprüche 1 bis 4, **dadurch gekennzeichnet, dass** die Querneigungs-Erfassungseinrichtung (21) einen in Arbeitsrichtung (A) linken Abstandssensor (4A) aufweist, welcher auf die Stellung des vorderen linken Laufwerks (4) in Bezug auf den Maschinenrahmen (3) bezogene linke Abstandswerte (VL) und einen in Arbeitsrichtung (A) rechten Abstandssensor (5B) aufweist, welcher auf die Stellung des vorderen rechten Laufwerks (5) in Bezug auf den Maschinenrahmen (3) bezogene rechte Abstandswerte umfasst, wobei die Steuereinrichtung (22) derart konfiguriert ist,

dass die Hubeinrichtung (7A) des hinteren rechten Laufwerks (7) eingefahren wird, wenn sich beim Vorschub der Bodenfräsmaschine der linke Abstandswert verringert und der rechte Abstandswert vergrößert, und
dass die Hubeinrichtung (7A) des hinteren rechten Laufwerks (7) ausgefahren wird, wenn sich beim Vorschub der Bodenfräsmaschine der linke Abstandswert vergrößert und der rechte Abstandswert verringert,
so dass die Längsachse (10A) der Fräswalze (10) während des Vorschubs der Bodenfräsmaschine im Wesentlichen parallel zu der Oberfläche des nicht bearbeiteten Bodens (8) verbleibt.

6. Selbstfahrende Bodenfräsmaschine nach einem der Ansprüche 1 bis 4, **dadurch gekennzeichnet, dass** die Querneigungs-Erfassungseinrichtung (21) einen in Arbeitsrichtung (A) linken Abstandssensor (4A) aufweist, welcher auf die Stellung des vorderen linken Laufwerks (4) in Bezug auf den Maschinenrahmen (3) bezogene linke Abstandswerte (VL) und einen in Arbeitsrichtung (A) rechten Abstandssensor (5B) aufweist, welcher auf die Stellung des vorderen rechten Laufwerks (5) in Bezug auf den Maschinenrahmen (3) bezogene rechte Abstandswerte ermittelt, wobei die Steuereinrichtung (22) derart konfiguriert ist, dass beim Vorschub der Bodenfräsmaschine die Hubstellung der Hubeinrichtung (7A) des hinteren rechten Laufwerks (7) derart eingestellt wird, dass die Differenz

($\Delta$V) der mit dem linken Abstandssensor (4B) und dem rechten Abstandssensor (5B) gemessenen Abstandswerte (VL, VR) minimiert wird.

7. Selbstfahrende Bodenfräsmaschine nach einem der Ansprüche 1 bis 4, **dadurch gekennzeichnet, dass** die Querneigungs-Erfassungseinrichtung (21) einen in Arbeitsrichtung (A) linken Abstandssensor (4A) aufweist, welcher auf die Stellung des vorderen linken Laufwerks (4) in Bezug auf den Maschinenrahmen (3) bezogenen linke Abstandswerte (VL) und einen in Arbeitsrichtung (A) rechten Abstandssensor (5B) ermittelt, welcher auf die Stellung des vorderen rechten Laufwerks (5) in Bezug auf den Maschinenrahmen (3) bezogene rechte Abstandswerte ermittelt, und dass eine Neigungsmesseinrichtung (30) vorgesehen ist, die derart ausgebildet ist, dass die Neigung des Maschinenrahmens (3) gegenüber der Horizontalen (H) beschreibende Maschinenrahmen-Neigungswerte ($\alpha$H) ermittelt werden, wobei
die Steuereinrichtung (22) derart konfiguriert ist, dass aus den linken und rechten Abstandswerten (VL) und (VR) die Querneigung der Bodenoberfläche (8) quer zur Arbeitsrichtung (A) der Bodenfräsmaschine in Bezug auf eine Bezugsebene des Maschinenrahmens (3) beschreibende Querneigungswerte ermittelt werden, und aus den Querneigungswerten und den Maschinenrahmen-Neigungswerten für aufeinanderfolgende Wegpunkte Querneigungs-Sollwerte ermittelt werden, die mit den Maschinenrahmen-Neigungswerten verglichen werden, wobei beim Vorschub der Bodenfräsmaschine die Hubstellung der Hubeinrichtung (7A) des hinteren rechten Laufwerks (7) derart eingestellt wird, dass die Differenz ($\Delta$V) zwischen den Querneigungs-Sollwerten und den Maschinenrahmen-Neigungswerten minimiert wird.

8. Selbstfahrende Bodenfräsmaschine nach einem der Ansprüche 1 bis 7, **dadurch gekennzeichnet, dass** die Abstands-Messeinrichtung (18) derart ausgebildet ist, dass der auf den Maschinenrahmen (3) bezogene Referenzpunkt (R) auf einer Längsseite des Maschinenrahmens (3) liegt.

9. Verfahren zum Steuern einer selbstfahrenden Bodenfräsmaschine, wobei die Bodenfräsmaschine aufweist:

einen Maschinenrahmen (3), der von einem Fahrwerk (2) getragen wird, welches ein vorderes linkes Laufwerk (4) und ein vorderes rechtes Laufwerk (5) und ein hinteres linkes und ein hinteres rechtes Laufwerk (6, 7) aufweist, eine am Maschinenrahmen (3) angeordnete Fräswalze (10),
den vorderen und hinteren Laufwerken zugeordnete Hubeinrichtungen (4A, 5A, 6A, 7A), die zum Anheben oder Absenken der vorderen und hinteren Laufwerke (4, 5, 6, 7) gegenüber dem Maschinenrahmen jeweils einfahrbar oder ausfahrbar sind, wobei die Hubeinrichtungen (4A, 5A, 6A, 7A) der vorderen Laufwerke (4, 5) derart miteinander zwangsgekoppelt sind, dass ein Anheben des linken vorderen Laufwerks ein Absenken des rechten vorderen Laufwerks und ein Absenken des linken vorderen Laufwerks ein Anheben des rechten vorderen Laufwerks bewirkt, oder
den hinteren Laufwerken (6, 7) zugeordnete Hubeinrichtungen (6A, 7A), die zum Anheben bzw. Absenken der hinteren Laufwerke (6, 7) gegenüber dem Maschinenrahmen (3) jeweils ein- bzw. ausfahrbar sind, wobei die vorderen Laufwerke (4, 5) in der Art einer pendelnden Lagerung mit dem Maschinenrahmen (3) derart verbunden sind, dass ein Anheben des linken vorderen Laufwerks ein Absenken des rechten vorderen Laufwerks und ein Absenken des linken vorderen Laufwerks ein Anheben des rechten vorderen Laufwerks bewirkt,
wobei der Abstand zwischen einem auf den Maschinenrahmen (3) bezogenen Referenzpunkt (R) und der Bodenoberfläche (8) gemessen wird und Abstandswerte ermittelt werden,
**dadurch gekennzeichnet, dass**
die Stellung des vorderen linken Laufwerks (4) und/oder des vorderen rechten Laufwerks (5) in Bezug auf den Maschinenrahmen (3) erfasst wird und aus der Stellung des vorderen linken Laufwerks (4) und/oder des vorderen rechten Laufwerks (5) die Querneigung der Bodenoberfläche (8) quer zur Arbeitsrichtung (A) der Bodenfräsmaschine beschreibende Querneigungswerte (VL, VR, $\Delta$V, $\alpha$) ermittelt werden, und
die Hubeinrichtungen (6A, 7A) zumindest der hinteren Laufwerke (6, 7) in Abhängigkeit von zumindest den Abstandswerten und den Querneigungswerten (VL, VR, $\Delta$V, $\alpha$) derart angesteuert werden, dass die Längsachse (10A) der Fräswalze (10) im Wesentlichen parallel zu der zu bearbeitenden Bodenoberfläche (8) ausgerichtet ist.

10. Verfahren nach Anspruch 9, **dadurch gekennzeichnet, dass** die ermittelten Querneigungswerte (VL, VR, $\Delta$V, $\alpha$) während des Vorschubs der Bodenfräsmaschine überwacht werden, wobei nach der Feststellung einer Änderung der Querneigung zwischen aufeinanderfolgenden Wegpunkten der von der Bodenfräsmaschine zurückgelegten Wegstrecke zumindest eines der hinteren Laufwerke (7) um einen Betrag angehoben oder abgesenkt wird, dass die Längsachse (10A) der Fräswalze (10) wieder im Wesentlichen parallel zu der bearbeitenden Bodenoberfläche (8) ausgerichtet wird.

11. Verfahren nach Anspruch 10, **dadurch gekennzeichnet, dass** nach der Feststellung einer Änderung der Querneigung zwischen aufeinanderfolgenden Wegpunkten das Anheben oder Absenken zumindest eines der hinteren Laufwerke (7) um den Betrag erst nach Ablauf eines vorgegebenen Zeitintervalls oder nach Zurücklegen einer vorgegebenen Wegstrecke erfolgt, wobei das vorgegebene Zeitintervall in Abhängigkeit von der Vorschubgeschwindigkeit der Bodenfräsmaschine bestimmt wird.

12. Verfahren nach einem der Ansprüche 9 bis 11, **dadurch gekennzeichnet, dass** die zu aufeinanderfolgenden Zeitpunkten und/oder an aufeinanderfolgenden Wegpunkten ermittelten Querneigungswerte (VL, VR, ΔV, α) gespeichert werden.

13. Verfahren nach einem der Ansprüche 9 bis 12, **dadurch gekennzeichnet, dass** auf die Stellung des in Arbeitsrichtung (A) vorderen, linken Laufwerks (4) in Bezug auf den Maschinenrahmen (3) bezogene linke Abstandswerte und auf die Stellung des in Arbeitsrichtung (A) vorderen rechten Laufwerks (5) in Bezug auf den Maschinenrahmen (3) bezogene rechte Abstandswerte ermittelt werden, wobei

das hintere rechte Laufwerk (7) gegenüber dem Maschinenrahmen (3) angehoben wird, wenn sich beim Vorschub der Bodenfräsmaschine der linke Abstandswert verringert und der rechte Abstandswert vergrößert, und

das hintere rechte Laufwerk (7) abgesenkt wird, wenn sich beim Vorschub der Bodenfräsmaschine der linke Abstandswert vergrößert und der rechte Abstandswert verringert,

so dass die Längsachse (10A) der Fräswalze (10) während des Vorschubs der Bodenfräsmaschine im Wesentlichen parallel zu der Oberfläche des nicht bearbeiteten Bodens (8) verbleibt.

14. Verfahren nach einem der Ansprüche 9 bis 13, **dadurch gekennzeichnet, dass** auf die Stellung des in Arbeitsrichtung (A) vorderen, linken Laufwerks (4) in Bezug auf den Maschinenrahmen (3) bezogene linke Abstandswerte (VL) und auf die Stellung des in Arbeitsrichtung (A) vorderen rechten Laufwerks (5) in Bezug auf den Maschinenrahmen (3) bezogene rechte Abstandswerte (VR) ermittelt werden, **dadurch gekennzeichnet, dass** beim Vorschub der Bodenfräsmaschine die Hubstellung der Hubeinrichtung (7A) des hinteren rechten Laufwerks (7) derart eingestellt wird, dass die Differenz der mit dem linken und rechten Abstandssensor gemessenen Abstandswerte minimiert wird.

15. Verfahren nach einem der Ansprüche 9 bis 13, **dadurch gekennzeichnet, dass** auf die Stellung des in Arbeitsrichtung (A) vorderen linken Laufwerks (4) in Bezug auf den Maschinenrahmen (3) bezogene linke Abstandswerte (VL) und auf die Stellung des in Arbeitsrichtung (A) vorderen rechten Laufwerks (5) in Bezug auf den Maschinenrahmen (3) bezogene rechte Abstandswerte (VR) ermittelt werden, wobei aus den linken und rechten Abstandswerten die Querneigung der Bodenoberfläche (8) quer zur Arbeitsrichtung (A) der Bodenfräsmaschine in Bezug auf eine Bezugsebene des Maschinenrahmens beschreibende Querneigungswerte (VL, VR, ΔV, α) ermittelt werden, und aus den Querneigungswerten (VL, VR, ΔV, α) und den Maschinenrahmen-Neigungswerten (αHist) für aufeinanderfolgende Wegpunkte Querneigungs-Sollwerte (αHsoll) ermittelt werden, die mit den Maschinenrahmen-Neigungswerten (αHist) verglichen werden, wobei beim Vorschub der Bodenfräsmaschine die Hubstellung der Hubeinrichtung (7A) des hinteren rechten Laufwerks (7) derart eingestellt wird, dass die Differenz (ΔV) zwischen den Querneigungs-Sollwerten (αHsoll) und den Maschinenrahmen-Neigungswerten (αHist) minimiert wird.

**Claims**

1. Self-propelled substrate milling machine comprising:

a machine frame (3) which is supported by an undercarriage (2) comprising a front left-hand running gear unit (4) and a front right-hand running gear unit (5) and a rear left-hand running gear unit (6) and a rear right-hand running gear unit (7),

a milling drum (10) arranged on the machine frame (3),

lifting devices (4A, 5A, 6A, 7A) assigned to the front and rear running gear units, which lifting devices (4A, 5A, 6A, 7A) can each be retracted or extended in order to raise or lower the front and rear running gear units (4, 5, 6, 7) relative to the machine frame (3), wherein the lifting devices (4A, 5A, 6A, 7A) of at least the front running gear units (4, 5) are force-coupled to one another in such a way that a raising of the front left-hand running gear unit causes a lowering of the front right-hand running gear unit, and a lowering of the front left-hand running gear unit causes a raising of the front right-hand running gear unit, or

lifting devices (6A, 7A) assigned to the rear running gear units (6, 7), which lifting devices can each be retracted or extended in order to raise or lower the rear running gear units (6, 7) relative to the machine frame (3), wherein the front running gear units (4, 5) are connected to the machine frame (3) in the manner of a full-floating mounting in such a way that a raising of the front left-hand running gear unit causes a lowering of the front right-hand running gear unit, and a lowering of the front left-hand running gear unit causes a raising of the front right-hand running gear unit,

a distance measuring device (18) which is designed in such a way that the distance between a reference point (R) relating to the machine frame (3) and the substrate surface (8) is measured, distance values being determined by the distance measuring device (18),

a control device (22) which is configured in such a way that control signals for the lifting devices (4A, 5A, 6A, 7A) are generated, wherein the lifting devices (4A, 5A, 6A, 7A) are designed in such a way that the running gear units (4, 5, 6, 7) are retracted or extended as a function of the control signals,

**characterised in that**

a transverse inclination detection device (21) is provided, which is designed in such a way that the position of the front left-hand running gear unit (4) and/or of the front right-hand running gear unit (5) in relation to the machine frame (3) is detected, and transverse inclination values (VL, VR, $\Delta$V, $\alpha$) describing the transverse inclination of the substrate surface (8) transverse to the working direction (A) of the substrate milling machine are determined from the position of the front left-hand running gear unit (4) and/or of the front right-hand running gear unit (5), and the control device (22) interacts with the distance measuring device (18) and the transverse inclination detection device (21), and the control device (22) is configured in such a way that the control device generates the control signals for controlling the lifting devices (6A, 7A) of at least the rear running gear units (6, 7) as a function of at least the distance values from the distance measuring device (18) and the transverse inclination values (VL, VR, $\Delta$V, $\alpha$) from the transverse inclination detection device (21), wherein at least the lifting devices (6A, 7A) of the rear running gear units are controlled in such a way that the longitudinal axis (10A) of the milling drum (10) is oriented substantially parallel to the substrate surface (8) to be machined.

2. Self-propelled substrate milling machine according to claim 1, **characterised in that** the control device (22) is configured in such a way that the transverse inclination values (VL, VR, $\Delta$V, $\alpha$) determined by the transverse inclination detection device (22) during the advance of the substrate milling machine are monitored, wherein after the determination of a change in the transverse inclination between successive waypoints of the distance travelled by the substrate milling machine, at least one of the lifting devices (7A) of the rear running gear units is retracted or extended by an amount such that the longitudinal axis (10A) of the milling drum (10) is again oriented substantially parallel to the substrate surface (8) to be machined.

3. Self-propelled substrate milling machine according to claim 2, **characterised in that** the control device (22) is configured in such a way that, after the determination of a change in the transverse inclination between successive waypoints, at least one of the lifting devices (7A) of the rear running gear units is retracted or extended by the amount only after a prespecified time interval has elapsed or after a prespecified distance has been travelled, wherein the control device (22) is configured in such a way that the determination of the prespecified time interval takes place as a function of the advance speed of the substrate milling machine.

4. Self-propelled substrate milling machine according to any of claims 1 to 3, **characterised in that** the control device (22) comprises a memory unit (25) for storing transverse inclination values determined by the transverse inclination value detection device at successive points in time and/or at successive waypoints.

5. Self-propelled substrate milling machine according to any of claims 1 to 4, **characterised in that** the transverse inclination detection device (21) comprises a left-hand distance sensor (4A) in relation to the working direction (A), which covers left-hand distance values (VL) in relation to the position of the front left-hand running gear unit (4) with respect to the machine frame (3), and a right-hand distance sensor (5B) in relation to the working direction (A), which covers right-hand distance values in relation to the position of the front right-hand running gear unit (5) with respect to the machine frame (3), wherein the control device (22) is configured in such a way that

the lifting device (7A) of the rear right-hand running gear unit (7) is retracted when the left-hand distance value decreases and the right-hand distance value increases during the advance of the substrate milling machine, and the lifting device (7A) of the rear right-hand running gear unit (7) is extended when the left-hand distance value increases and the right-hand distance value decreases during the advance of the substrate milling machine, so that the longitudinal axis (10A) of the milling drum (10) remains substantially parallel to the surface of the unmachined substrate (8) during the advance of the substrate milling machine.

6. Self-propelled substrate milling machine according to any of claims 1 to 4, **characterised in that** the transverse inclination detection device (21) comprises a left-hand distance sensor (4A) in relation to the working direction (A), which determines left-hand distance values (VL) in relation to the position of the front left-hand running gear unit (4) with respect to the machine frame (3), and a right-hand distance sensor (5B) in relation to the working direction (A), which determines right-hand distance values in relation to the position of the front right-hand running gear unit (5) with respect to the machine frame (3), wherein the control device (22) is configured in such a way that during the advance of the substrate milling machine, the lifting position of the lifting device (7A) of the rear right-hand running gear unit (7) is set in such a way that the difference ($\Delta V$) between the distance values (VL, VR) measured with the left-hand distance sensor (4B) and with the right-hand distance sensor (5B) is minimised.

7. Self-propelled substrate milling machine according to any of claims 1 to 4, **characterised in that** the transverse inclination detection device (21) comprises a left-hand distance sensor (4A) in relation to the working direction (A), which determines left-hand distance values (VL) in relation to the position of the front left-hand running gear unit (4) with respect to the machine frame (3), and a right-hand distance sensor (5B) in relation to the working direction (A), which determines right-hand distance values in relation to the position of the front right-hand running gear unit (5) with respect to the machine frame (3), and **in that** an inclination measuring device (30) is provided which is designed in such a way that machine frame inclination values ($\alpha H$) describing the inclination of the machine frame (3) with respect to the horizontal (H) are determined, wherein

the control device (22) is configured in such a way that transverse inclination values describing the transverse inclination of the substrate surface (8) transverse to the working direction (A) of the substrate milling machine with respect to a reference plane of the machine frame (3) are determined from the left-hand and right-hand distance values (VL) and (VR), and transverse inclination target values are determined from the transverse inclination values and the machine frame inclination values for successive waypoints, which target values are compared with the machine frame inclination values, wherein during the advance of the substrate milling machine, the lifting position of the lifting device (7A) of the rear right-hand running gear unit (7) is set in such a way that the difference ($\Delta V$) between the transverse inclination target values and the machine frame inclination values is minimised.

8. Self-propelled substrate milling machine according to any of claims 1 to 7, **characterised in that** the distance measuring device (18) is designed in such a way that the reference point (R) relating to the machine frame (3) lies on a longitudinal side of the machine frame (3).

9. Method for controlling a self-propelled substrate milling machine, the substrate milling machine comprising:

a machine frame (3) which is supported by an undercarriage (2) comprising a front left-hand running gear unit (4) and a front right-hand running gear unit (5) and a rear left-hand and a rear right-hand running gear unit (6, 7), a milling drum (10) arranged on the machine frame (3),
lifting devices (4A, 5A, 6A, 7A) assigned to the front and rear running gear units (4, 5, 6, 7), which lifting devices (4A, 5A, 6A, 7A) can each be retracted or extended in order to raise or lower the front and rear running gear units relative to the machine frame, wherein the lifting devices (4A, 5A, 6A, 7A) of the front running gear units (4, 5) are force-coupled to one another in such a way that a raising of the front left-hand running gear unit causes a lowering of the front right-hand running gear unit, and a lowering of the front left-hand running gear unit causes a raising of the front right-hand running gear unit, or
lifting devices (6A, 7A) assigned to the rear running gear units (6, 7), which lifting devices (6A, 7A) can each be retracted or extended in order to raise or lower the rear running gear units (6, 7) relative to the machine frame (3),
wherein the front running gear units (4, 5) are connected to the machine frame (3) in the manner of a full-floating mounting in such a way that a raising of the front left-hand running gear unit causes a lowering of the front right-hand running gear unit, and a lowering of the front left-hand running gear unit causes a raising of the front right-hand running gear unit,
wherein the distance between a reference point (R) relating to the machine frame (3) and the substrate surface (8) is measured and distance values are determined,
**characterised in that**
the position of the front left-hand running gear unit (4) and/or of the front right-hand running gear unit (5) in relation to the machine frame (3) is detected and transverse inclination values (VL, VR, $\Delta V$, $\alpha$) describing the transverse inclination of the substrate surface (8) transverse to the working direction of the substrate milling machine are determined from the position of the front left-hand running gear unit (4) and/or of the front right-hand running gear unit (5), and
the lifting devices (6A, 7A) of at least the rear running gear units (6, 7) are controlled as a function of at least the distance values and of the transverse inclination values (VL, VR, $\Delta V$, $\alpha$) in such a way that the longitudinal axis (10A) of the milling drum (10) is oriented substantially parallel to the substrate surface (8) to be machined.

10. Method according to claim 9, **characterised in that** the determined transverse inclination values (VL, VR, $\Delta$V, $\alpha$) are monitored during the advance of the substrate milling machine, wherein after the determination of a change in the transverse inclination between successive waypoints of the distance travelled by the substrate milling machine, at least one of the rear running gear units (7) is raised or lowered by an amount such that the longitudinal axis (10A) of the milling drum (10) is again oriented substantially parallel to the substrate surface being machined.

11. Method according to claim 10, **characterised in that**, after the determination of a change in the transverse inclination between successive waypoints, at least one of the rear running gear units (7) is raised or lowered by the amount only after a prespecified time interval has elapsed or after a prespecified distance has been travelled, the prespecified time interval being determined as a function of the advance speed of the substrate milling machine.

12. Method according to any of claims 9 to 11, **characterised in that** the transverse inclination values (VL, VR, $\Delta$V, $\alpha$) determined at successive points in time and/or at successive waypoints are saved.

13. Method according to any of claims 9 to 12, **characterised in that** left-hand distance values in relation to the position of the front left-hand running gear unit (4) in the working direction (A) with respect to the machine frame (3) and right-hand distance values in relation to the position of the front right-hand running gear unit (5) in the working direction (A) with respect to the machine frame (3) are determined, wherein

the rear right-hand running gear unit (7) is raised relative to the machine frame (3) when the left-hand distance value decreases and the right-hand distance value increases during the advance of the substrate milling machine, and
the rear right-hand running gear unit (7) is lowered when the left-hand distance value increases and the right-hand distance value decreases during the advance of the substrate milling machine,
so that the longitudinal axis (10A) of the milling drum (10) remains substantially parallel to the surface of the unmachined substrate (8) during the advance of the substrate milling machine.

14. Method according to any of claims 9 to 13, **characterised in that** left-hand distance values (VL) in relation to the position of the front left-hand running gear unit (4) in the working direction (A) with respect to the machine frame (3) and right-hand distance values (VR) in relation to the position of the front right-hand running gear unit (5) in the working direction (A) with respect to the machine frame (3) are determined, **characterised in that** during the advance of the substrate milling machine, the lifting position of the lifting device (7A) of the rear right-hand running gear unit (7) is set in such a way that the difference between the distance values measured with the left-hand and the right-hand distance sensor is minimised.

15. Method according to any of claims 9 to 13, **characterised in that** left-hand distance values (VL) in relation to the position of the front left-hand running gear unit (4) in the working direction (A) with respect to the machine frame (3) and right-hand distance values (VR) in relation to the position of the front right-hand running gear unit (5) in the working direction with respect to the machine frame (3) are determined, wherein transverse inclination values (VL, VR, $\Delta$V, $\alpha$) describing the transverse inclination of the substrate surface (8) transverse to the working direction (A) of the substrate milling machine with respect to a reference plane of the machine frame are determined from the left-hand and right-hand distance values, and transverse inclination target values ($\alpha$Hsoll) are determined from the transverse inclination values (VL, VR, $\Delta$V, $\alpha$) and the machine frame inclination values ($\alpha$Hist) for successive waypoints, which target values ($\alpha$Hsoll) are compared with the machine frame inclination values ($\alpha$Hist), wherein during the advance of the substrate milling machine, the lifting position of the lifting device (7A) of the rear right-hand running gear unit (7) is set in such a way that the difference ($\Delta$V) between the transverse inclination target values ($\alpha$Hsoll) and the machine frame inclination values ($\alpha$Hist) is minimised.

**Revendications**

1. Fraiseuse de sol automotrice comportant:

un châssis principal (3), qui est porté par un châssis roulant (2), qui comporte un train de roulement avant gauche (4) et un train de roulement avant droit (5) et un train de roulement arrière gauche (6) et un train de roulement arrière droit (7),

un tambour de fraisage (10) disposé sur le châssis principal (3),

des dispositifs de levage (4A, 5A, 6A, 7A) associés aux trains de roulement avant et arrière, qui peuvent être rétractés ou déployés pour lever ou abaisser les trains de roulement avant et arrière (4, 5, 6, 7) par rapport au châssis principal (3), où les dispositifs de levage (4A, 5A, 6A, 7A) d'au moins les trains de roulement avant (4, 5) sont couplés positivement entre eux de telle manière qu'un levage du train de roulement avant gauche entraîne un abaissement du train de roulement avant droit et qu'un abaissement du train de roulement avant gauche entraîne un levage du train de roulement avant droit, ou

des dispositifs de levage (6A, 7A) associés aux trains de roulement arrière (6, 7), qui peuvent être rétractés ou déployés pour le levage ou l'abaissement des trains de roulement arrière (6, 7) par rapport au châssis principal (3), où les trains de roulement avant (4, 5) sont reliés au châssis principal (3) à la manière d'un palier pendulaire de telle manière qu'un levage du train de roulement avant gauche entraîne un abaissement du train de roulement avant droit et qu'un abaissement du train de roulement avant gauche entraîne un levage du train de roulement avant droit,

un dispositif de mesure de distance (18) qui est conçu de telle manière que la distance entre un point de référence (R) relatif au châssis principal (3) et la surface du sol (8) est mesurée, où des valeurs de distance sont déterminées par le dispositif de mesure de distance (18),

un dispositif de commande (22), qui est configuré de telle manière que des signaux de commande pour les dispositifs de levage (4A, 5A, 6A, 7A) sont générés, où les dispositifs de levage (4A, 5A, 6A, 7A) sont conçus de telle manière que les trains de roulement (4, 5, 6, 7) sont rétractés ou déployés en fonction des signaux de commande,

**caractérisée en ce que**

un dispositif de détection d'inclinaison transversale (21) est prévu, qui est conçu de telle manière que la position du train de roulement avant gauche (4) et/ou du train de roulement avant droit (5) par rapport au châssis principal (3) est détectée et que des valeurs d'inclinaison transversale (VL, VR, DV, a) décrivant l'inclinaison transversale de la surface du sol (8) transversalement à la direction de travail (A) de la fraiseuse de sol sont déterminées à partir de la position du train de roulement avant gauche (4) et/ou du train de roulement avant droit (5), et

le dispositif de commande (22) coopère avec le dispositif de mesure de distance (18) et le dispositif de détection d'inclinaison transversale (21), et le dispositif de commande (22) est configuré de telle manière que le dispositif de commande génère les signaux de commande pour la commande des dispositifs de levage (6A, 7A) au moins des trains de roulement arrière (6, 7) en fonction au moins des valeurs de distance du dispositif de mesure de distance (18) et des valeurs d'inclinaison transversale (VL, VR, DV, a) du dispositif de détection d'inclinaison transversale (21), où au moins les dispositifs de levage (6A, 7A) des trains de roulement arrière sont commandés de telle manière que l'axe longitudinal (10A) du tambour de fraisage (10) est aligné sensiblement parallèlement à la surface du sol (8) à travailler.

2. Fraiseuse de sol automotrice selon la revendication 1, **caractérisée en ce que** le dispositif de commande (22) est configuré de telle manière que les valeurs d'inclinaison transversale (VL, VR, DV, a) déterminées par le dispositif de détection d'inclinaison transversale (22) pendant l'avancement de la fraiseuse de sol sont surveillées, où après la constatation d'une variation de l'inclinaison transversale entre des points de trajet successifs du trajet parcouru par la fraiseuse de sol, au moins l'un des dispositifs de levage (7A) des trains de roulement arrière est rétracté ou déployé d'une valeur telle que l'axe longitudinal (10A) du tambour de fraisage (10) est à nouveau aligné sensiblement parallèlement à la surface du sol (8) à travailler.

3. Fraiseuse de sol automotrice selon la revendication 2, **caractérisée en ce que** le dispositif de commande (22) est configuré de telle manière que, après la constatation d'une variation de l'inclinaison transversale entre des points de trajet successifs, la rétraction ou le déploiement d'au moins l'un des dispositifs de levage (7A) des trains de roulement arrière de la valeur ne se produit qu'après l'écoulement d'un intervalle de temps prédéterminé ou après le parcours d'un trajet prédéterminé, où le dispositif de commande (22) est configuré de telle manière que la détermination de l'intervalle de temps prédéterminé a lieu en fonction de la vitesse d'avancement de la fraiseuse de sol.

4. Fraiseuse de sol automotrice selon l'une des revendications 1 à 3, **caractérisée en ce que** le dispositif de commande (22) comporte une unité de mémoire (25) pour mémoriser des valeurs d'inclinaison transversale déterminées à des instants successifs et/ou à des points de trajet successifs par le dispositif de détection d'inclinaison transversale.

5. Fraiseuse de sol automotrice selon l'une des revendications 1 à 4, **caractérisée en ce que** le dispositif de détection d'inclinaison transversale (21) comporte un capteur de distance gauche (4A) dans la direction de travail (A), qui comporte des valeurs de distance gauche (VL) relatives à la position du train de roulement avant gauche (4) par rapport au châssis principal (3) et un capteur de distance droit (5B) dans la direction de travail (A), qui comprend des valeurs de distance droites relatives à la position du train de roulement avant droit (5) par rapport au châssis principal (3), où le dispositif de commande (22) est configuré de telle sorte

que le dispositif de levage (7A) du train de roulement arrière droit (7) est rétracté lorsque la valeur de distance gauche diminue et la valeur de distance droite augmente pendant l'avancement de la fraiseuse de sol, et que le dispositif de levage (7A) du train de roulement arrière droit (7) est déployé lorsque la valeur de distance gauche augmente et la valeur de distance droite diminue pendant l'avancement de la fraiseuse de sol, de manière que l'axe longitudinal (10A) du tambour de fraisage (10) demeure sensiblement parallèle à la surface du sol non travaillé (8) pendant l'avancement de la fraiseuse de sol.

6. Fraiseuse de sol automotrice selon l'une des revendications 1 à 4, **caractérisée en ce que** le dispositif de détection d'inclinaison transversale (21) comporte un capteur de distance gauche (4A) dans la direction de travail (A), qui comporte des valeurs de distance gauches (VL) relatives à la position du train de roulement avant gauche (4) par rapport au châssis principal (3) et un capteur de distance droit (5B) dans la direction de travail (A), qui détermine des valeurs de distance droites relatives à la position du train de roulement avant droit (5) par rapport au châssis principal (3), où le dispositif de commande (22) est configuré de telle manière que, pendant l'avancement de la fraiseuse de sol, la position de levage du dispositif de levage (7A) du train de roulement arrière droit (7) est réglée de telle manière que la différence (DV) des valeurs de distance (VL, VR) mesurées avec le capteur de distance gauche (4B) et le capteur de distance droit (5B) est minimisée.

7. Fraiseuse de sol automotrice selon l'une des revendications 1 à 4, **caractérisée en ce que** le dispositif de détection d'inclinaison transversale (21) comporte un capteur de distance gauche (4A) dans la direction de travail (A), qui détermine des valeurs de distance gauches (VL) relatives à la position du train de roulement avant gauche (4) par rapport au châssis principal (3) et un capteur de distance droit (5B) dans la direction de travail (A), qui détermine des valeurs de distance droite relatives à la position du train de roulement avant droit (5) par rapport au châssis principal (3), et **en ce qu'**un dispositif de mesure d'inclinaison (30) est prévu, qui est conçu de telle manière que des valeurs d'inclinaison du châssis principal (aH) décrivant l'inclinaison du châssis principal (3) par rapport à l'horizontale (H) sont déterminées, où le dispositif de commande (22) est configuré de telle manière que des valeurs d'inclinaison transversale décrivant l'inclinaison transversale de la surface du sol (8) transversalement à la direction de travail (A) de la fraiseuse de sol en référence à un plan de référence du châssis principal (3) sont déterminées, et à partir des valeurs d'inclinaison transversale et des valeurs d'inclinaison du châssis principal, des valeurs cibles d'inclinaison transversale pour des points de trajet successifs sont déterminées, qui sont comparées aux valeurs d'inclinaison du châssis principal, où lors de l'avancement de la fraiseuse de sol, la position de levage du dispositif de levage (7A) du train de roulement arrière droit (7) est réglée de telle manière que la différence (DV) entre les valeurs cibles d'inclinaison transversale et les valeurs d'inclinaison du châssis principal est minimisée.

8. Fraiseuse de sol automotrice selon l'une des revendications 1 à 7, **caractérisée en ce que** le dispositif de mesure de distance (18) est conçu de telle manière que le point de référence (R) relatif au châssis principal (3) est situé sur un côté longitudinal du châssis principal (3).

9. Procédé de commande d'une fraiseuse de sol automotrice, où la fraiseuse de sol comporte:

un châssis principal (3), qui est porté par un châssis roulant (2), qui comporte un train de roulement avant gauche (4) et un train de roulement avant droit (5) et un train de roulement arrière gauche et un train de roulement arrière droit (6, 7), un tambour de fraisage (10) disposé sur le châssis principal (3), des dispositifs de levage (4A, 5A, 6A, 7A) associés aux trains de roulement avant et arrière, qui peuvent être rétractés ou déployés pour le levage ou l'abaissement des trains de roulement avant et arrière (4, 5, 6, 7) par rapport au châssis principal, où les dispositifs de levage (4A, 5A, 6A, 7A) des trains de roulement avant (4, 5) sont couplés positivement entre eux de telle manière qu'un levage du train de roulement avant gauche entraîne un abaissement du train de roulement avant droit et qu'un abaissement du train de roulement avant gauche entraîne un levage du train de roulement avant droit, ou des dispositifs de levage (6A, 7A) associés aux trains de roulement arrière (6, 7), qui peuvent être rétractés ou déployés pour le levage ou l'abaissement des trains de roulement arrière (6, 7) par rapport au châssis principal (3), où les trains de roulement avant (4, 5) sont reliés au châssis principal (3) à la manière d'un palier pendulaire de telle manière qu'un levage du train de roulement avant gauche entraîne un abaissement du train de roulement avant droit et qu'un abaissement du train de roulement avant gauche entraîne un levage du train de roulement

19

avant droit,

où la distance entre un point de référence (R) relatif au châssis principal (3) et la surface du sol (8) est mesurée et des valeurs de distance sont déterminées,

**caractérisé en ce que**

la position du train de roulement avant gauche (4) et/ou du train de roulement avant droit (5) par rapport au châssis principal (3) est détectée et à partir de la position du train de roulement avant gauche (4) et/ou du train de roulement avant droit (5) des valeurs d'inclinaison transversale (VL, VR, DV, a) décrivant l'inclinaison transversale de la surface du sol (8) transversalement à la direction de travail (A) de la fraiseuse de sol sont déterminées, et

les dispositifs de levage (6A, 7A) au moins des trains de roulement arrière (6, 7) sont commandés en fonction au moins des valeurs de distance et des valeurs d'inclinaison transversale (VL, VR, DV, a) de telle manière que l'axe longitudinal (10A) du tambour de fraisage (10) est aligné sensiblement parallèlement à la surface du sol (8) à travailler.

10. Procédé selon la revendication 9, **caractérisé en ce que** les valeurs d'inclinaison transversale (VL, VR, DV, a) déterminées sont surveillées pendant l'avancement de la fraiseuse de sol, où après la constatation d'une variation de l'inclinaison transversale entre des points de trajet successifs du trajet parcouru par la fraiseuse de sol, au moins l'un des trains de roulement arrière (7) est relevé ou abaissé d'une valeur telle que l'axe longitudinal (10A) du tambour de fraisage (10) est à nouveau aligné sensiblement parallèlement à la surface du sol travaillée.

11. Procédé selon la revendication 10, **caractérisé en ce qu'**après la constatation d'une variation de l'inclinaison transversale entre des points de trajet successifs le levage ou l'abaissement au moins de l'un des trains de roulement arrière (7) de la valeur n'a lieu qu'après l'écoulement d'un intervalle de temps prédéterminé ou après le parcours d'un trajet prédéterminé, où l'intervalle de temps prédéterminé est déterminé en fonction de la vitesse d'avancement de la fraiseuse de sol.

12. Procédé selon l'une des revendications 9 à 11, **caractérisé en ce que** les valeurs d'inclinaison transversale (VL, VR, DV, a) déterminées à des instants successifs et/ou à des points de trajet successifs sont mémorisées.

13. Procédé selon l'une des revendications 9 à 12, **caractérisé en ce que** des valeurs de distance gauches relatives à la position du train de roulement avant gauche (4) dans la direction de travail (A) par rapport au châssis principal (3) et des valeurs de distance droites relatives à la position du train de roulement avant droit (5) dans la direction de travail (A) par rapport au châssis principal (3) sont déterminées, où

le train de roulement arrière droit (7) est relevé par rapport au châssis principal (3) lorsque la valeur de distance gauche diminue et que la valeur de distance droite augmente pendant l'avancement de la fraiseuse de sol, et le train de roulement arrière droit (7) est abaissé lorsque la valeur de distance gauche augmente et que la valeur de distance droite diminue pendant l'avancement de la fraiseuse de sol, de manière que l'axe longitudinal (10A) du tambour de fraisage (10) demeure sensiblement parallèle à la surface du sol (8) non travaillé pendant l'avancement de la fraiseuse de sol.

14. Procédé selon l'une des revendications 9 à 13, **caractérisé en ce que** des valeurs de distance gauches (VL) relatives à la position du train de roulement avant gauche (4) dans la direction de travail (A) par rapport au châssis principal (3) et des valeurs de distance droites (VR) relatives à la position du train de roulement avant droit (5) dans la direction de travail (A) par rapport au châssis principal (3) sont déterminées, **caractérisé en ce que** pendant l'avancement de la fraiseuse de sol la position de levage du dispositif de levage (7A) du train de roulement arrière droit (7) est réglée de telle manière que la différence des valeurs de distance mesurées avec le capteur de distance gauche et droit est minimisée.

15. Procédé selon l'une des revendications 9 à 13, **caractérisé en ce que** des valeurs de distance gauches (VL) relatives à la position du train de roulement avant gauche (4) dans la direction de travail (A) par rapport au châssis principal (3) et des valeurs de distance droites (VR) relatives à la position du train de roulement avant droit (5) dans la direction de travail (A) par rapport au châssis principal (3) sont déterminées, où à partir des valeurs de distance gauches et droites, des valeurs d'inclinaison transversale (VL, VR, DV, a) décrivant l'inclinaison transversale de la surface du sol (8) transversalement à la direction de travail (A) de la fraiseuse de sol en référence à un plan de référence du châssis principal sont déterminées, et à partir des valeurs d'inclinaison transversale (VL, VR, DV, a) et des valeurs d'inclinaison du châssis principal (aHist) pour des points de trajet successifs des valeurs cibles d'inclinaison transversale (aHsoll) sont déterminées, qui sont comparées aux valeurs d'inclinaison du châssis principal (aHist), où lors de l'avancement de la fraiseuse de sol la position de levage du dispositif de levage (7A) du train de roulement arrière droit (7) est réglée de telle manière que la différence (DV) entre les valeurs cibles d'inclinaison transversale (aHsoll) et les valeurs d'inclinaison du châssis principal (aHist) est minimisée.

A

14

1

3

4A(5A)

6A(7A)

2

8

4(5)  (9)   12(13)   10   11   (9)   6(7)

EP 4 249 680 B1

**Fig. 2**

**Fig. 3A**

**Fig. 3B**

**Fig. 4A**

**Fig. 4B**

**Fig. 4C**

**Fig. 5A**

**Fig. 5B**

**Fig. 6A**

**Fig. 6B**

20

18

19

3

6A

30

7A

8

12

6

7

8A

1.8%

**Fig. 7A**

21

1

4A

3

5A

ΔV

8

4

5

2%

**Fig. 7B**

18  20

19

3

8

12

6A

30

7A

6

8A

7

2%

**Fig. 8A**

21  1

4A

3

5A

4

0

8

5

2%

**Fig. 8B**

18
20

19

3

8
12
6A
30
6
8A
7A
7

**Fig. 9A**

2%

21
4A
1
3
5A

ΔV

8
4
5

1.8%

**Fig. 9B**

**Fig. 10A**

**Fig. 10B**

**Fig. 11A**

**Fig. 11B**

**Fig. 12A**

**Fig. 12B**

| s [m] | VL [mm] | VR [mm] | Δ V [mm] | Δ V sum [mm] | α Hsoll [%] | |
|---|---|---|---|---|---|---|
| -8 | 40 | 40 | 0 | 0 | 0 | |
| 0 | 40 | 40 | 0 | 0 | 0 | Fig. 4 |
| 8 | 41,6 | 38,4 | 3,2 | 3,2 | 0,2 | Fig. 5 |
| 16 | 41,6 | 38,4 | 3,2 | 6,4 | 0,4 | Fig. 6 |
| 24 | 41,6 | 38,4 | 3,2 | 9,6 | 0,6 | |
| 32 | 41,6 | 38,4 | 3,2 | 12,8 | 0,8 | |
| 40 | 41,6 | 38,4 | 3,2 | 16 | 1 | |
| 48 | 41,6 | 38,4 | 3,2 | 19,2 | 1,2 | |
| 56 | 41,6 | 38,4 | 3,2 | 22,4 | 1,4 | |
| 64 | 41,6 | 38,4 | 3,2 | 25,6 | 1,6 | |
| 72 | 41,6 | 38,4 | 3,2 | 28,8 | 1,8 | |
| 80 | 41,6 | 38,4 | 3,2 | 32 | 2 | Fig. 7 |
| 88 | 40 | 40 | 0 | 32 | 2 | Fig. 8 |
| 96 | 38,4 | 41,6 | -3,2 | 28,8 | 1,8 | Fig. 9 |
| 104 | 38,4 | 41,6 | -3,2 | 25,6 | 1,6 | Fig. 10 |
| 112 | 38,4 | 41,6 | -3,2 | 22,4 | 1,4 | |
| 120 | 38,4 | 41,6 | -3,2 | 19,2 | 1,2 | |
| 128 | 38,4 | 41,6 | -3,2 | 16 | 1 | |
| 136 | 38,4 | 41,6 | -3,2 | 12,8 | 0,8 | |
| 144 | 38,4 | 41,6 | -3,2 | 9,6 | 0,6 | |
| 152 | 38,4 | 41,6 | -3,2 | 6,4 | 0,4 | |
| 160 | 38,4 | 41,6 | -3,2 | 3,2 | 0,2 | |
| 168 | 38,4 | 41,6 | -3,2 | 0 | 0 | Fig. 11 |
| 176 | 40 | 40 | 0 | 0 | 0 | Fig. 12 |

**Fig. 13**

**Fig. 14**

**Fig. 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0836659 B1
- DE 10210763 A1
- EP 1855899 B1
- DE 102006020293 A1
- DE 102018127222 B4
- DE 19617442 C1